(19) Europäisches Patentamt
European Patent Office
Office européen des brevets

(11) EP 2 899 033 B1

(12) **EUROPEAN PATENT SPECIFICATION**

(45) Date of publication and mention of the grant of the patent:
**16.05.2018 Bulletin 2018/20**

(21) Application number: **13839317.8**

(22) Date of filing: **11.09.2013**

(51) Int Cl.:
***B41M 5/00*** *(2006.01)* ***B41J 2/01*** *(2006.01)*
***C09D 11/00*** *(2014.01)* ***C09D 11/101*** *(2014.01)*
***C09D 11/107*** *(2014.01)* ***C09D 11/322*** *(2014.01)*
***C09D 11/40*** *(2014.01)* ***C09D 11/54*** *(2014.01)*

(86) International application number:
**PCT/JP2013/074546**

(87) International publication number:
**WO 2014/045970 (27.03.2014 Gazette 2014/13)**

# (54) INK COMPOSITION, INK SET, AND IMAGE FORMATION METHOD

TINTENZUSAMMENSETZUNG, TINTENSATZ UND BILDERZEUGUNGSVERFAHREN

COMPOSITION D'ENCRE, ENSEMBLE D'ENCRES ET PROCÉDÉ DE FORMATION D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2012 JP 2012210184**
**27.09.2012 JP 2012214628**

(43) Date of publication of application:
**29.07.2015 Bulletin 2015/31**

(73) Proprietor: **FUJIFILM Corporation**
**Tokyo 106-8620 (JP)**

(72) Inventors:
- **TOJO, Kaoru**
  **Ashigarakami-gun**
  **Kanagawa 258-8577 (JP)**
- **YANAGI, Terukazu**
  **Ashigarakami-gun**
  **Kanagawa 258-8577 (JP)**
- **OOISHI, Yasufumi**
  **Ashigarakami-gun**
  **Kanagawa 258-8577 (JP)**
- **YASUDA, Koji**
  **Ashigarakami-gun**
  **Kanagawa 258-8577 (JP)**
- **TAKEDA, Akira**
  **Ashigarakami-gun**
  **Kanagawa 258-8577 (JP)**

(74) Representative: **Klunker IP**
**Patentanwälte PartG mbB**
**Destouchesstraße 68**
**80796 München (DE)**

(56) References cited:
**WO-A1-2012/105704 JP-A- 2006 131 884**
**JP-A- 2009 256 607 JP-A- 2011 195 822**
**JP-A- 2012 001 632 JP-A- 2012 001 632**
**JP-A- 2012 162 655**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 899 033 B1

## Description

Technical Field

The present invention relates to an ink composition, an ink set, and an image forming method.

Background Art

An image forming method by an ink-jet method is widely used in a field of office printer, home printer, or the like and industrial fields since a desired image can be formed on a variety of media to be recorded.

As the image forming method by an ink-jet method, a method in which an ink including a polymerizable compound which is applied on a recording medium is cured by irradiation of an active energy ray such as an ultraviolet ray to form an image is known.

As the image forming method by an ink-jet method, a technique in which an image is formed by using an ink composition and a treatment liquid containing an aggregating component which aggregates a component in the ink composition and allowing the component in the ink composition to aggregate on a recording medium is also known.

Further, an image forming technique in which the above-mentioned two methods are combined is also studied.

For example, as an ink set which is capable of forming an image having an excellent abrasion resistance or the like, an ink set including an ink composition containing water, a pigment, a polymer particle, and a water-soluble polymerizable compound and a treatment liquid containing an aggregating component which aggregates a component in the ink composition is known (see, for example, Japanese Patent Application Laid-Open (JP-A) No. 2010-70693, JP-A No. 2010-69805, JP-A No. 2011-46872, JP-A No. 2011-46871, JP-A No. 2011-174013, and JP-A No. 2011-195822).

On the other hand, as a maintenance liquid having an excellent cleaning performance for ink adherents and an ink set, a maintenance liquid containing from 50% by mass to 75% by mass of water with respect to the total mass, alkylene glycol monoalkyl ether, and alkylene glycol monoalkyl ether acetate, and an ink set including the maintenance liquid and an ink composition containing a pigment, polymer particle, and water are known (see, for example, JP-A No. 2012-158084).

As an ink composition which has an excellent stability over time and which is capable of improving the glossiness of a printed matter, an ink composition including a colorant containing a specific disazo pigment and a vinyl polymer containing a hydrophobic structural unit and a hydrophilic structural unit, and a graft polymer containing a specific nonionic unit and a unit having a polysiloxane structure is known (see, for example, JP-A No. 2012-25867).

SUMMARY OF INVENTION

[Problems to be Solved by Invention]

By the way, although an ink composition containing water, a pigment, and polymer particle can form an image having a high strength (abrasion resistance or the like) by containing the polymer particle as a binder, which is advantageous, there is a problem in that, when the ink composition is attached on an ejection surface (nozzle surface) of an ink jet recording head and dried, the ink composition is likely to be adhered and it is hard to remove the ink composition from the ejection surface, which is problematic.

On the other hand, an ink composition further containing a water-soluble polymerizable compound in addition to the above-mentioned component is constituted such that the ink composition is applied to a recording medium, then polymerization of the polymerizable compound is performed by irradiation of an active energy ray such as ultraviolet, and the strength of an image is secured by a polymer generated by polymerization. For this reason, when an ink composition containing such a water-soluble polymerizable compound is attached to an ejection surface of an ink jet recording head and dried, the ink composition is hard to adhere as it is and can be removed relatively easily compared with an ink composition not containing a water-soluble polymerizable compound and containing polymer particle, which is advantageous.

However, regarding an ink composition containing water, a pigment, a polymer particle, and a water-soluble polymerizable compound, in some cases, the removal performance from an ejection surface of an ink jet recording head is demanded to be further improved. If the removal performance of an ink composition from an ejection surface is further improved, it is thought that an ink composition attached to the ejection surface can be easily removed by a special maintenance liquid as described in, for example, JP-A No. 2012-158084 as well as even by, for example, water.

Since flowability of an ink composition containing water, a pigment, a polymer particle, and a water-soluble polymerizable compound after applied to a recording medium and before irradiated with an active energy ray is relatively high, an image may be deformed or the surface of the image becomes rough to cause gloss unevenness when the ink composition (image) which has been applied on the recording medium is dried.

The present invention has been made in consideration of the above, and an object of the present invention is to provide an ink composition, ink set, and image forming method for ink jet recording in which removal performance from an ejection surface of an ink jet recording head is excellent and an image whose image deformation and gloss unevenness are inhibited can be formed.

[Means for Solving Problems]

The present inventor found that the above-mentioned problems can be solved by a combination of a specified polymerizable compound and a specified polymer particle, and completed the present invention basing on the findings.
In other words, concrete means for solving the problems are as follows.

<1> An ink composition for ink jet recording containing water, a pigment, a (meth)acrylamide compound, and a polymer particle including a polymer composed of a structural unit derived from methacrylic acid and at least one type of structural unit derived from a methacrylic acid ester having an SP value of from 19.0 $MPa^{1/2}$ to 25.0 $MPa^{1/2}$, the SP value being calculated by the Okitsu method, wherein said at least one type of structural unit derived from a methacrylic acid ester is selected from the group consisting of a structural unit derived from methyl methacrylate, a structural unit derived from benzyl methacrylate, and a structural unit derived from phenoxy ethyl methacrylate.
<2> The ink composition for ink jet recording according to <1>, wherein at least one of the (meth)acrylamide compound is a multifunctional (meth)acrylamide compound.
<3> The ink composition for ink jet recording according to <1> or <2>, wherein the SP value of the methacrylic acid ester is from 19.4 $MPa^{1/2}$ to 22.0 $MPa^{1/2}$.
<4> The ink composition for ink jet recording according to any one of <1> to <3>, wherein the polymer particle is a self-dispersing polymer particle.
<5> The ink composition for ink jet recording according to any one of <1> to <4>, wherein a glass transition temperature of the polymer particle is 80°C or higher.
<6> The ink composition for ink jet recording according to any one of <1> to <5>, wherein the (meth)acrylamide compound is a compound represented by the following General Formula (1):

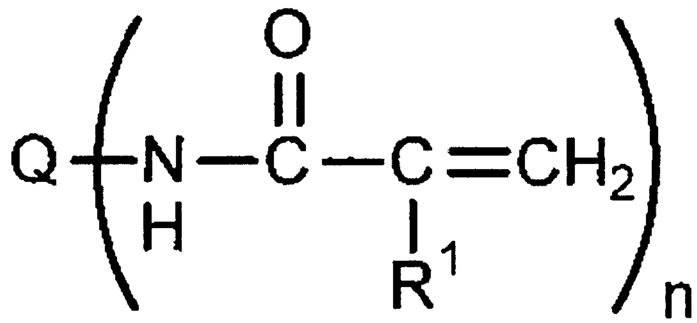

General Formula (1)

In the General Formula (1), Q represents an n-valent linking group and $R^1$ represents a hydrogen atom or a methyl group. n represents an integer of 1 or greater.

<7> The ink composition for ink jet recording according to any one of <1> to <6>, wherein the (meth)acrylamide compound is a compound represented by the following

General Formula (2):

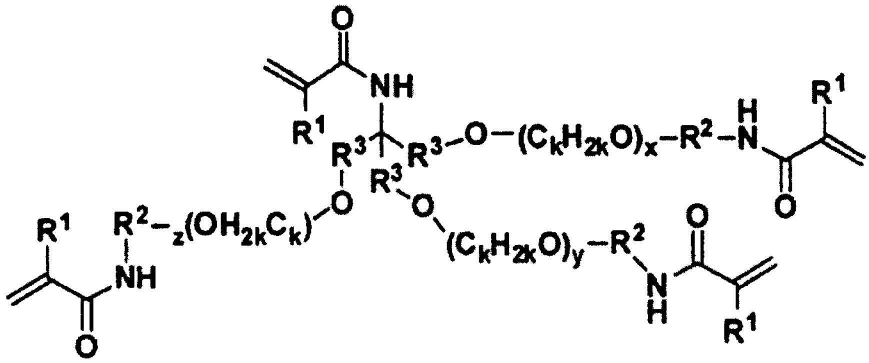

wherein in the General formula (2), $R^1$ represents a hydrogen atom or a methyl group, $R^2$ represents a straight chain or branched alkylene group having a carbon number of from 2 to 4, $R^3$ represents a divalent linking group, k represents 2 or 3, and x, y and z each independently represents an integer of from 0 to 6.

<8> An image forming method including: an ink applying process in which the ink composition for ink jet recording according to any one of <1> to <7> is ejected from an ink jet recording head to form an image by applying the ink composition for ink jet recording on a recording medium ; and a drying process in which the image after the ink applying process is dried.

<9> The image forming method according to <8>, further including a curing process in which, after the drying process, the image after drying is irradiated with an active energy ray to cure the image.

<10> The image forming method according to <8> or <9>, wherein the recording medium includes one or more pigment layer on at least one side of a support whose main component is cellulose pulp.

<11> The image forming method according to any one of <8> to <10>, further including before the ink applying process a treatment liquid applying process in which a treatment liquid containing an aggregating component which forms an aggregate when in contact with the ink composition for ink jet recording is applied on the recording medium, wherein the aggregating component is a compound which can change the pH of the ink composition, a multivalent metal salt, a cationic polymer or a mixture of two or more thereof.

<12> The image forming method according to <11>, wherein the aggregating component is an acid.

<13> An ink set for ink jet recording including: the ink composition for ink jet recording according to any one of <1> to <7>; and a treatment liquid containing an aggregating component which forms an aggregate when in contact with the ink composition for ink jet recording, wherein the aggregating component is a compound which can change the pH of the ink composition, a multivalent metal salt, a cationic polymer or a mixture of two or more thereof.

[Effect of Invention]

According to the present invention, an ink composition, ink set, and image forming method for ink jet recording in which removal performance from an ejection surface of an ink jet recording head is excellent and an image whose image deformation and gloss unevenness are inhibited can be formed can be provided.

## BRIEF DESCRIPTION OF THE DRAWINGS

Figure 1 is a schematic block diagram illustrating a configuration example of an ink jet recording apparatus which is used for carrying out an image forming method of the present invention.

## DESCRIPTION OF EMBODIMENTS

The ink composition for ink jet recording, the ink set for ink jet recording, and the image forming method of the present invention will be described in detail.

In the present disclosure, regarding the term "process", not only an independent process but also a process which is not clearly distinguished from other processes is included in the term as long as an expected effect of the process is attained.

In the present disclosure, the range of number represented by using " to " means a range including the values preceding and following the " to " as the minimum value and the maximum value, respectively.

In the present disclosure, in cases in which an amount of each component in a composition is referred to, when plural substances corresponding to the component exist in the composition, the amount refers to the total amount of the plural substances existing in the composition unless otherwise specified.

In the present disclosure, the term "(meth)acrylamide" means acrylamide or methacrylamide, the term "(meth)acrylic acid" means acrylic acid or methacrylic acid, and the term "(meth)acrylate" means acrylate or methacrylate.

<<Ink composition for ink jet recording >>

The ink composition for ink jet recording (hereinafter, also simply referred to as "ink composition" or "ink") of the present invention contains water, a pigment, a (meth)acrylamide compound, and a polymer particle made of a polymer composed of a structural unit derived from methacrylic acid and a structural unit derived from a methacrylic acid ester having an SP value of from 19.0 $MPa^{1/2}$ to 25.0 $MPa^{1/2}$.

The ink composition of the present invention is an aqueous ink containing water as a solvent.

For an ink composition containing water, a pigment, polymer particles, and a water-soluble polymerizable compound, in some cases, removal performance from an ejection surface of an ink jet recording head (hereinafter, also simply referred to as "head") is needed to be further improved. If removal performance of the ink composition from an ejection surface is improved, the ink composition attached on the ejection surface can be easily removed by a special maintenance liquid as well as even by, for example, water.

Since an ink composition containing water, a pigment, a polymer particle, and a water-soluble polymerizable compound has a flowability to some extent after the ink composition is applied on a recording medium and before irradiated with an active energy ray, image deformation (for example, image crack) may be caused or the surface of an image becomes rough and gloss unevenness may be caused when an image of the ink composition which has been applied on a recording medium is dried (in particular, dried rapidly).

With respect to such problems, an ink composition of the present invention has an excellent removal performance from an ejection surface of a head, and further, an image whose image deformation and gloss unevenness are inhibited can be formed.

As the reason that the ink composition of the present invention has an excellent removal performance from an ejection surface of a head, the following reasons are possible.

In general, a polymer particle (specifically, a polymer which the polymer particle is made of) contained in an aqueous ink is composed of a structural unit derived from a polar monomer and a structural unit derived from a non-polar monomer. Here, the structural unit derived from a non-polar monomer forming a core portion of the polymer particle in the aqueous ink. The structural unit derived from a polar monomer contributes to the dispersion stability of the polymer particle in the aqueous ink.

An ejection surface of a head for ejecting an aqueous ink has hydrophobic properties from the viewpoint of inhibiting attachment of the aqueous ink.

Under such circumstances, there is a tendency that, as hydrophobicity of the above-mentioned non-polar monomer is increased, removal performance from an ejection surface deteriorates. This is thought to be because a portion of a structural unit derived from a non-polar monomer in the polymer particle is strongly attached to an ejectiion surface which is hydrophobic due to a hydrophobic-hydrophobic interaction.

In contrast, since, in the polymer particle of the present invention, a methacrylic acid ester which has a low hydrophobicity to some extent and a high hydrophilicity (specifically, an SP value of 19.0 $MPa^{1/2}$ or higher) is used for a non-polar monomer, attachment of the polymer particle to an ejection surface is inhibited and as the result, the removal performance of an ink composition from the ejection surface is thought to be improved.

On the other hand, when the hydrophilicity of the non-polar monomer is too high (when the SP value is too high), the polymer particle dissolved in an aqueous ink and, in the first place, it is hard for the polymer particle to exist in its state.

With respect to such problems, since, in a polymer particle of the present invention, methacrylic acid ester having a low hydrophilicity to some extent (specifically, an SP value of 25.0 $MPa^{1/2}$ or lower) is used for a non-polar monomer, the polymer particle can stably exist in an aqueous ink. It is an important factor that a polymer particle stably exists in an aqueous ink not only from the viewpoint of improving abrasion resistance of an image but also from the viewpoint of inhibiting the below-mentioned image deformation or from the viewpoint of inhibiting the below-mentioned gloss unevenness.

As the reason that image deformation is inhibited by the ink composition of the present invention, the following reasons are possible.

Image deformation is thought to be a phenomenon in which, when the ink composition (or an image) which has been applied on a recording medium is dried before the ink composition is irradiated with an active energy ray (in particular, when the ink composition is rapidly dried), the image is deformed by the heat during drying.

On this point, since, in the ink composition of the present invention, a polymer particle is made of a polymer

composed only of a structural unit derived from methacrylic acid and a structural unit derived from a methacrylic acid ester, the ink composition has a high strength even when the ink composition is dried. This is thought to be because, since the polymer particle contained in the ink composition is made of a polymer composed only of a structural unit derived from methacrylic acid and a structural unit derived from a methacrylic acid ester, a glass transition temperature of the polymer particle is high compared with cases in which a polymer particle includes a structural unit derived from acrylic acid or derivatives of acrylic acid .

Further, since the ink composition of the present invention contains a (meth)acrylamide compound, a viscosity of the ink composition which has been applied on a recording medium and which is in the process of drying increases compared with cases in which a (meth)acrylamide compound is not contained. The increase in the viscosity is considerable particularly when the ink composition is applied on the recording medium together with a treatment liquid. As used herein, the term "treatment liquid" refers to a liquid containing an aggregating component which forms an aggregate when in contact with the ink composition (described in detail hereinbelow).

As mentioned above, since the ink composition of the present invention has a high strength and a high viscosity even during the ink composition is dried, it is thought that image deformation can be inhibited by using the ink composition of the present invention.

As the reason that gloss unevenness is inhibited by the ink composition of the present invention, the following reasons are possible.

It is thought that gloss unevenness is caused because, when an ink composition is applied on a recording medium and a component such as a pigment contained in the ink composition is allowed to aggregate to form an image, an irregularity (unevenness) in the degree of aggregation of the pigment or the like is caused depending on the position of the image, whereby the surface of the image becomes rough.

With respect to this reason, since the ink composition of the present invention contains a (meth)acrylamide compound, the viscosity of the ink composition, which has been applied on a recording medium (preferably together with the above-mentioned treatment liquid) and which is in the process of drying, increases compared with cases in which a (meth)acrylamide compound is not contained, whereby movement of a pigment or the like is limited to some extent. Further, the ink composition of the present invention also contains a polymer particle which stably exists, whereby movement of a pigment or the like when the ink composition is applied on a recording medium is limited to some extent.

As mentioned above, in the ink composition of the present invention, it is thought that, because unevenness in the degree of aggregation of the pigment or the like is inhibited by limitting movement of the pigment or the like during drying to some extent, gloss unevenness of a formed image is inhibited.

Each component in the ink composition of the present invention will now be described.

<Polymer particle >

The ink composition of the present invention contains at least one polymer particle (hereinafter, also referred to as "specific polymer particle") made of a polymer (hereinafter, also referred to as "specific polymer") composed of a structural unit derived from methacrylic acid, and at least one type of structural unit derived from a methacrylic acid ester having an SP value of from 19.0 $MPa^{1/2}$ to 25.0 $MPa^{1/2}$, the SP value being calculated by the Okitsu method, wherein the said at least one type of structural unit derived from a methacrylic acid ester is selected from the group consisting of a structural unit derived from methyl methacrylate, a structural unit derived from benzyl methacrylate, and a structural unit derived from phenoxy ethyl methacrylate .

The specific polymer particle is different from the below-mentioned polymeric dispersant (polymeric dispersant covering at least part of a pigment) and is a particle existing apart from the pigment, and more particularly, is a particle composed of the above-mentioned specific polymer.

In general, when a polymer particle is contained in an ink composition, adhesion of an image to a recording medium and scratch resistance of an image are improved.

For example, in cases in which an ink composition is applied on a recording medium together with the below-mentioned treatment liquid to form an image, when the polymer particle is in contact with the treatment liquid or a region where the treatment liquid is dried, dispersion of the polymer particle is destabilized in the ink composition, and the polymer particle aggregates to increase the viscosity of the ink composition, whereby the polymer particle has a function of immobilizing an ink composition. As a result, adhesion of the ink composition to the recording medium and scratch resistance of the image can be further improved.

The specific polymer is a polymer composed of a structural unit derived from methacrylic acid and at least one type of structural unit derived from a methacrylic acid ester having an SP value of from 19.0 $MPa^{1/2}$ to 25.0 $MPa^{1/2}$.

The specific polymer is composed only of a structural unit derived from methacrylic acid and a structural unit derived from a methacrylic acid ester. As mentioned above, the glass transition temperature of the polymer particle thus becomes high compared with cases in which a structural unit derived from acrylic acid or derivatives of acrylic acid is contained, and as the result, image deformation is inhibited.

From the viewpoint of better inhibiting image deformation, the glass transition temperature of the polymer particle is preferably 70°C or higher, more preferably 80°C or higher, further preferably 90°C or higher, and yet further preferably 100°C or higher.

The upper limit of the glass transition temperature of the specific polymer is not particularly restricted, and the glass transition temperature of the specific polymer may be, for example, lower than 150°C.

The glass transition temperature (Tg) of the specific polymer can be appropriately controlled by a method which is usually used. For example, the glass transition temperature (Tg) of the specific polymer can be controlled in a desired range by appropriately selecting the type of a monomer (a polymerizable compound) forming the specific polymer, the constitution ratio of the monomer, the molecular weight of a polymer which the specific polymer is made of, or the like.

In the present invention, for a glass transition temperature (Tg) of a polymer, a measured Tg obtained by an actual measurement is applied.

Specifically, the measured Tg refers to a value which is measured using a differential scanning calorimetry (DSC) EXSTAR 6220 manufactured by SII NanoTechnology Inc. under normal measurement conditions. In cases in which the measurement is difficult due to decomposition of the polymer or the like, the calculated Tg, which is calculated by the following calculation formula, is applied. The calculated Tg is calculated by the following Formula (1):

$$1/Tg = \Sigma(X_i/Tg_i) \cdots (1)$$

Here, a polymer to be calculated is formed by copolymerization of n types of monomer components (i = 1 to n). $X_i$ represents the weight fraction of i-th monomer ($\sum X_i = 1$), and $Tg_i$ represents a glass transition temperature (absolute temperature) of a homopolymer of i-th monomer. It is noted that $\sum$ means summation with respect to i = 1 to n. As a value ($Tg_i$) of the glass transition temperature of a homopolymer of each monomer, a value described in Polymer Handbook (3rd Edition) (J. Brandrup, written by E. H. Immergut (Wiley-Interscience, 1989)) is adopted.

As the specific polymer particle, a polymer particle obtained by a phase inversion emulsification method is preferred, and the below-mentioned particle of a self-dispersing polymer particle (self-dispersing polymer particle) is more preferred.

As used herein the term "self-dispersing polymer" refers to a water-insoluble polymer which can attain a dispersed state in an aqueous medium due to a functional group (in particular, an acidic group or a salt thereof) which the polymer itself includes, when the polymer is dispersed by a phase inversion emulsification method in the absence of a surfactant.

The scope of the term "dispersed state", as used herein, includes both an emulsified state in which a water-insoluble polymer in a liquid state is dispersed in an aqueous medium (emulsion) and a state in which a water-insoluble polymer in a solid state is dispersed in an aqueous medium (suspension).

The term "water-insoluble" means that the solubility with respect to 100 parts by mass of water (25°C) is 5.0 parts by mass or less.

Examples of the phase inversion emulsification method include a method in which a polymer is dissolved or dispersed in a solvent (for example, water-soluble organic solvent or the like), then put into water as it is without adding a surfactant, stirred and mixed in a state in which a salt-forming group (for example, an acidic group) which the polymer includes is neutralized, and after removing the solvent, an aqueous dispersion in an emulsified or dispersed state is obtained.

As the self-dispersing polymer particle, for example, among self-dispersing polymer particles describedin paragraphs 0090 to 0121 of JP-A No. 2010-64480 and in paragraphs 0130 to 0167 of JP-A No. 2011-068085, a polymer particle made of a polymer composed of a structural unit derived from a methacrylic acid and a structural unit derived from methacrylic acid ester having an SP value of from 19.0 $MPa^{1/2}$ to 25.0 $MPa^{1/2}$ can be selected and used.

(Structural unit derived from methacrylic acid)

As mentioned above, a structural unit derived from methacrylic acid has a function as a structural unit derived from a polar monomer in the specific polymer, and is a structural unit which contributes to dispersion stability of the specific polymer particle in the ink composition.

When, in the specific polymer, a structural unit derived from methacrylic acid as a structural unit derived from a polar monomer is changed to a structural unit derived from acrylic acid, the SP value (25.5 $MPa^{1/2}$) of acrylic acid is higher than the SP value (24.0 $MPa^{1/2}$) of methacrylic acid, and thus the difference between the SP value of a structural unit derived from a polar monomer (hydrophilic structural unit) and the SP value of a structural unit derived from a non-polar monomer (hydrophobic structural unit) becomes large. As the result, removal performance of the ink composition from an ejection surface (an ejection surface of a head) which is hydrophobic may be decreased.

A method of introducing a structural unit derived from methacrylic acid into the specific polymer is not particularly restricted, and examples thereof include a known method such as a method of polymerizing methacrylic acid as a monomer.

The content (copolymerization ratio) of the structural unit derived from methacrylic acid in the specific polymer is not particularly restricted, and is preferably from 2% by mass to 30% by mass, more preferably from 5% by mass to 20% by mass, and yet further preferably from 5% by mass to 15% by mass with respect to the total amount of the specific polymer.

When the content of the structural unit derived from methacrylic acid is 2% by mass or higher, dispersion stability of the specific polymer particle is further improved, thereby further effectively attaining the effect of the present invention.

When the content of the structural unit derived from methacrylic acid is 30% by mass or lower, the dissolution of the specific polymer particle in the ink composition can be inhibited, thereby further effectively attaining the effect of the present invention.

(Structural unit derived from a methacrylic acid ester having an SP value of from 19.0 $MPa^{1/2}$ to 25.0 $MPa^{1/2}$)

The specific polymer includes at least one type of structural unit derived from a methacrylic acid ester (hereinafter, also referred to as "specific methacrylic acid ester") having an SP value of from 19.0 $MPa^{1/2}$ to 25.0 $MPa^{1/2}$.

The structural unit derived from the specific methacrylic acid ester functions as a structural unit derived from a non-polar monomer in the specific polymer, and, as mentioned above, forms a core portion of the specific polymer particle.

When the SP value of the methacrylic acid ester is less than 19.0 $MPa^{1/2}$, the hydrophobicity of the structural unit derived from a non-polar monomer becomes too high, and therefore, removal performance of the ink composition from an ejection surface (an ejection surface of a head) which is hydrophobic is decreased.

When the SP value of the methacrylic acid ester is higher than 25.0 $MPa^{1/2}$, the hydrophilicity of a structural unit derived from a non-polar monomer, which is in turn the hydrophilicity of the whole polymer particle, becomes too high, and therefore, it becomes difficult for the polymer particle to stably exist in the ink composition of the present invention which is an aqueous ink (in other words, in some cases, a polymer particle is dissolved in the ink composition, thereby not existing as particle).

The SP value of the specific methacrylic acid ester is preferably from 19.4 $MPa^{1/2}$ to 22.0 $MPa^{1/2}$, from the viewpoint of effectively attaining the effect of the present invention.

The SP value (solubility parameter, unit: $MPa^{1/2}$) of the present invention refers to an SP value calculated by the Okitsu method.

Here, the Okitsu method is a method of calculating an SP value using a theoretical formula (theoretical formula for solubility parameter (SP value) proposed by Toshinao Okitsu ) described in the Journal of The Adhesion Society of Japan Vol.29, No.6(1993), pages 249 to 259.

The method of introducing the structural unit derived from the specific methacrylic acid ester into the specific polymer is not particularly restricted, and examples thereof include a known method such as a method of polymerizing one or two or more specific methacrylic acid esters as monomers.

As the specific structural unit derived from the specific methacrylic acid ester, at least one selected from the group consisting of a structural unit derived from methyl methacrylate, a structural unit derived from benzyl methacrylate, and a structural unit derived from phenoxy ethyl methacrylateis used.

The content (copolymerization ratio) of the structural unit derived from the specific methacrylic acid ester in the specific polymer is not particularly restricted, and, from the viewpoint of dispersion stability, is preferably from 70% by mass to 98% by mass, more preferably from 80% by mass to 95% by mass, and yet further preferably from 85% by mass to 95% by mass with respect to the total amount of the specific polymer.

When the content of the structural unit derived from the specific methacrylic acid ester is 70% by mass or higher, the dissolution of the specific polymer particle in an ink composition can be further inhibited, thereby further effectively attaining the effect of the present invention.

When the content of the structural unit derived from the specific methacrylic acid ester is 98% by mass or lower, the dispersion stability of the specific polymer particle is further improved, thereby further effectively attaining the effect of the present invention.

Here, when the specific polymer includes two or more types of structural units derived from specific methacrylic acid esters, the content of the structural unit derived from the specific methacrylic acid ester refers to the total content of the structural units derived from the specific methacrylic acid esters.

From the viewpoint of further effectively attaining the effect of the present invention, a yet further preferable mode of the specific polymer in the present invention is a mode composed of the structural unit derived from methacrylic acid of from 2% by mass to 30% by mass (more preferably from 5% by mass to 20% by mass, and yet further preferably

from 5% by mass to 15% by mass) and the structural unit derived from the specific methacrylic acid ester of from 70% by mass to 98% by mass (more preferably from 80% by mass to 95% by mass, and yet further preferably from 85% by mass to 95% by mass) (note that the total amount of the structural unit derived from methacrylic acid and the structural unit derived from the specific methacrylic acid ester is 100% by mass).

The molecular weight of the specific polymer forming the specific polymer particle is preferably from 3,000 to 200,000, more preferably from 5,000 to 150,000, and still more preferably from 10,000 to 100,000, in terms of weight average molecular weight. When the weight average molecular weight is 3,000 or more, the amount of water-soluble component can be effectively set to a small amount. When the weight average molecular weight is 200,000 or less, the stability of the self-dispersibility of the specific polymer particle can be improved.

The weight average molecular weight of the specific polymer forming the specific polymer particle is measured with a gel permeation chromatography (GPC). In GPC, HLC-8020GPC (manufactured by Tosoh Corporation) is used; TSKgel and three columns of Super Multipore HZ-H (manufactured by Tosoh Corporation, 4.6 mm ID × 15 cm) are used; and THF (tetrahydrofuran) is used as an eluent. Regarding the GPC conditions, the sample concentration is 0.45 % by mass, the flow rate is 0.35 ml/min, the sample injection amount is 10 μl, and the measurement temperature is 40°C. The detection is performed by using an IR detector. The calibration curve is determined from the following eight samples: standard sample TSK standard, polystyrene manufactured by Tosoh Corporation: F-40, F-20, F-4, F-1, A-5000, A-2500, and A-1000, and n-propylbenzene.

The average particle diameter of the specific polymer particles of the present invention (particularly, self-dispersing polymer particles) is preferably in the range of from 10 nm to 400 nm, more preferably in the range of from 10 to 200 nm, still more preferably in the range of from 10 to 100 nm, yet further preferably in the range of from 10 to 50 nm, in terms of volume average particle diameter. When the volume average particle size is 10 nm or more, suitability for production is improved. When the volume average particle diameter is 400 nm or less, storage stability is improved. The particle diameter distribution of the polymer particles is not particularly limited, and may be a broad particle diameter distribution or a mono-dispersed particle diameter distribution. Two or more types of polymer particles having different particle diameter distributions may be mixed and used.

The average particle diameter and the particle diameter distribution of the polymer particles are obtained by measuring the volume average particle diameter by a dynamic light scattering method, using NANOTRAC PARTICLE SIZE DISTRIBUTION MEASURING INSTRUMENT UPA-EX150 (manufactured by NIKKISO Co., Ltd.).

The ink composition in the present invention may contain only one type of the specific polymer particle (preferably self-dispersing polymer particle) or may contain two or more types of the specific polymer particle.

The content (total content) of the specific polymer particles (preferably self-dispersing polymer particle) in the ink composition is preferably from 0.5 to 5.0% by mass, further preferably from 0.5 to 3.0% by mass, and yet further preferably from 0.5 to 2.0% by mass with respect to the total amount of the ink composition.

When the content of the specific polymer particles is 5.0% by mass or lower, removal performance of the ink composition from an ejection surface is further improved.

In general, in an ink composition in which the content of polymer particles is 5.0% by mass or smaller, image deformation and gloss unevenness are likely to occur.

For this reason, when the content of the specific polymer particles in the ink composition of the present invention (with respect to the total amount of the ink composition) is 5.0% by mass or smaller, effects of inhibiting image deformation and inhibiting gloss unevenness due to the specific polymer particles and (meth)acrylamide compound are further noticeably attained.

< (Meth)acrylamide compound >

The ink composition of the present invention contains at least one (meth)acrylamide compound.

The (meth)acrylamide compound is a compound having, in the molecule, one or more (meth)acrylamide structure.

The (meth)acrylamide compound is a polymerizable compound (polymerizable monomer) which is polymerized by being irradiated with an active energy ray, and is a polymerizable compound having a high polymerizability and polymerization efficiency when an image is cured. As a result, abrasion resistance or scratch resistance of the formed image can be improved.

When the ink composition of the present invention contains the (meth)acrylamide compound together with the above-mentioned specific polymer particle, image deformation and gloss unevenness can be noticeably inhibited.

In other words, in the ink composition of the present invention, when a (meth)acrylamide compound is replaced with another polymerizable compound (for example, a (meth)acrylate compound), image deformation and gloss unevenness tend to deteriorate.

The (meth)acrylamide compound in the present invention is preferably water-soluble.

Here, the term "water-soluble" refers to dissolving in water at a prescribed concentration. The (meth)acrylamide

compound may have characteristics of dissolving in an aqueous ink or, if the case may be, in a treatment liquid. Specifically, the solubility to water is preferably 10% by mass or higher and more preferably 15% by mass or higher.

The (meth)acrylamide compound in the present invention may be a monofunctional (meth)acrylamide compound or a multifunctional (meth)acrylamide compound.

Here, the monofunctional (meth)acrylamide compound refers to a compound having, in the molecule, one (meth)acrylamide structure; and the multifunctional (meth)acrylamide compound refers to a compound having, in the molecule, two or more (meth)acrylamide structures.

In the present invention, from the viewpoints of further inhibiting image deformation and gloss unevenness, preferably, at least one (meth)acrylamide compound is a multifunctional (meth)acrylamide compound. When at least one (meth)acrylamide compound is a multifunctional (meth)acrylamide compound, polymerizability and polymerization efficiency when an image is cured by ultraviolet irradiation are improved, and in turn, the abrasion resistance or scratch resistance of the image is improved, which is preferred.

In this case, the content of the multifunctional (meth)acrylamide compound is preferably from 5% by mass to 30% by mass, more preferably from 5% by mass to 20% by mass, and yet further preferably from 5% by mass to 15% by mass with respect to the total amount of the ink composition.

As the multifunctional (meth)acrylamide compound, a compound in which n in the General Formula (1) described lateris an integer of 2 or greater is preferred, and a compound represented by the General Formula (2) described later is more preferred.

On the other hand, in the present invention, from the viewpoint of a favorable permeability to a pigment layer of a coated paper in cases in which a coated paper is used as a recording medium, at least one (meth)acrylamide compound is also preferably a monofunctional (meth)acrylamide compound. As a result, not only an image but also a pigment layer is cured, the adhesion of the image to a recording medium is further improved.

In this case, the content of the monofunctional (meth)acrylamide compound is preferably from 10% by mass to 30% by mass, more preferably from 10% by mass to 25% by mass, and yet further preferably from 10% by mass to 20% by mass with respect to the total amount of the ink composition.

Examples of the monofunctional (meth)acrylamide compound include hydroxyethyl (meth)acrylamide, hydroxypropyl(meth)acrylamide, dimethyl aminoethyl (meth)acrylamide, dimethyl aminopropyl(meth)acrylamide, and isopropyl (meth)acrylamide; the monofunctional (meth)acrylamide compound is yet further preferably hydroxyethyl (meth)acrylamide and most preferably hydroxyethyl acrylamide.

In the present invention, from the viewpoint of the permeability to a coated layer of a coated paper in cases in which a coated paper is used as a recording medium, and from the viewpoint of inhibiting image deformation and gloss unevenness, the ink composition of the present invention preferably contains both a monofunctional (meth)acrylamide compound and a multifunctional (meth)acrylamide compound (more preferably, a compound represented by the general Formula (2) below) as (meth)acrylamide compounds.

In this case, each of a preferable range of the content of the monofunctional (meth)acrylamide compound and a preferable range of the content of the multifunctional (meth)acrylamide compound is as mentioned above. A preferable range of the total content is as follows.

The content of the (meth)acrylamide compound in the ink composition of the present invention (in cases in which two or more (meth)acrylamide compounds are contained, the total contentthereof) is preferably from 5% by mass to 50% by mass, preferably from 10% by mass to 50% by mass, and more preferably from 15% by mass to 35% by mass with respect to the total amount of the ink composition.

When the total amount of the (meth)acrylamide compound is in the above-mentioned range, the curing reaction properties are favorable and curing can be performed uniformly on the whole image.

As the (meth)acrylamide compound in the present invention, a compound represented by the general Formula (1) below is preferred.

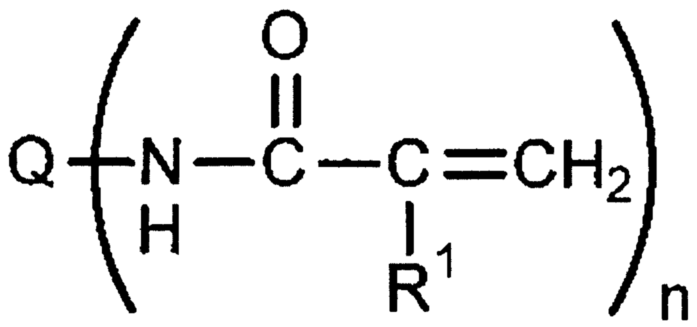

General Formula (1)

In the General Formula (1), Q represents an n-valent group, and $R^1$ represents a hydrogen atom or a methyl group. n represents an integer of 1 or greater.

A compound represented by the General Formula (1) is a compound in which an unsaturated vinyl monomer is bonded to a group Q by an amide bond.

A compound in which n in the General Formula (1) is 1 is a monofunctional (meth)acrylamide compound, and a compound in which n in the General Formula (1) is an integer of 2 or greater is a multifunctional (meth)acrylamide compound.

In the General Formula (1), $R^1$ represents a hydrogen atom or a methyl group, and preferably is a hydrogen atom.

From the viewpoint of improving the permeability, polymerization efficiency, ejection stability, the valency number n of the group Q is 1 or greater, preferably from 1 to 6, and more preferably from 1 to 4.

In cases in which the valency number n is an integer of 2 or greater, from the viewpoint of balancing the solubility and curing properties, n is preferably from 2 to 6, and more preferably from 2 to 4.

In cases in which n in the General Formula (1) is 1, the group Q is not particularly restricted as long as the group Q can be linked to a (meth)acrylamide structure. In cases in which n is 1, the group Q is preferably selected from groups which have water-solublity. Specific examples thereof include a monovalent residue which is formed by removing one or more hydrogen atoms or a hydroxyl group from a compound selected from the following compound group X.

(Compound group X)

The compound group X includes: polyol compounds such as ethylene glycol, diethylene glycol, triethylene glycol, polyethylene glycol, propylene glycol, dipropylene glycol, tripropylene glycol, polypropylene glycol, 1,3-propanediol, 1,2-butanediol, 1,3-butanediol, 1,4-butanediol, 2,3-butanediol, 1,5-pentanediol, 1,4-pentanediol, 2,4-pentanediol, 3-methyl-15-entanediol 2-methyl-2,4-pentanediol, 15-hexanediol 16-hexanediol 25-hexanediol, glycerin, 1,2,4-butanetriol, 1,2,6-hexanetriol, 1,2,5-pentanetriol, thioglycol, trimethylolpropane, ditrimethylolpropane, trimethylolethane, ditrimethylolethane, neopentyl glycol, pentaerythritol, dipentaerythritol, condensates thereof, low molecular polyvinyl alcohols, or sugars; and polyamine compounds such as ethylene diamine, diethylene triamine, triethylene tetramine, polyethylene imine, or polypropylene diamine.

When n is an integar of 2 or greater, examples of group Q include a substituted or unsubstituted alkylene group having a carbon number of 4 or less such as methylene, ethylene, propylene, or butylene group, divalent or higher valent linking group including a saturated or unsaturated heterocycle (such as a pyridine ring, an imidazole ring, a pyrazine ring, a piperidine ring, a piperazine ring, or a morpholine ring), and divalent or higher valent residue of a polyol compound containing an oxyalkylene group (preferably, oxyethylene group), divalent or higher valent residue of a polyol compound containing three or more oxyalkylene groups (preferably, oxyethylene group).

As the compound represented by the General Formula (1), a water-soluble polymerizable compound can be appropriately selected from among the water-soluble polymerizable compounds which are described, for example, in JP-A No. 2010-69805, JP-A No. 2011-46872, JP-A No. 2011-178896, JP-A No. 2011-174013, and JP-A No. 2011-195822, and can be used.

As the (meth)acrylamide compound in the present invention, a compound represented by the General formula (2) below, is preferable from the viewpoint in that the compound has high polymerizing ability and curing ability.

This compound is a tetra-functional (meth)acrylamide compound having, in the molecule, four (meth)acrylamide structures as polymerizable groups. Hereinafter, the term "(meth)acrylamide structure" is also referred to as a "(meth)acrylamide group".

Further, the compound exhibits excellent curing performance comes from the polymerization reaction by applying energy, for example, an active energy ray such as $\alpha$-ray, $\gamma$-ray, X-ray, ultraviolet, visible light, infrared light, or electron ray, or heat. The compound represented by the General Formula (2) below exhibits water-solubility, and well dissolves in water-soluble organic solvent such as water or alcohol.

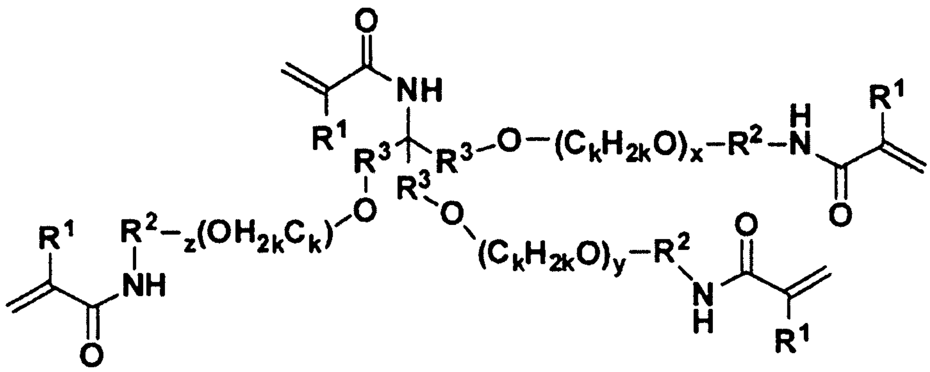

General Formula (2)

In the General formula (2), $R^1$ represents a hydrogen atom or a methyl group, and preferably a hydrogen atom. The plural $R^1$ may be the same or different.

$R^2$ represents a straight chain or branched alkylene group having a carbon number of from 2 to 4. The plural $R^2$ may be the same or different. $R^2$ is preferably an alkylene group having a carbon number of from 3 to 4, more preferably an alkylene group having a carbon number of from 3, and particularly preferable a straight chain alkylene group having a carbon number of 3. The alkylene group of $R^2$ may further have a substituent, and examples of the substituent include an aryl group, or an alkoxy group;

$R^2$ does not have a structure in which, an oxygen atom and a nitrogen atom, which bonds to the both ends of $R^2$ respectively, are bonded to the same carbon atom of $R^2$. $R^2$ is a straight chain or branched alkylene group which connect an oxygen atom and a nitrogen atom of a (meth)acrylamide group. Here, when an alkylene group has a branched structure, the structure can be a -O-C-N-structure (hemiaminal structure) in which an oxygen atom and a nitrogen atom on the (meth)acrylamide group bonded to respective ends of the alkylene group are connected to the same carbon atom in the alkylene group. However, the compounds represented by the general formula (2) do not include a compound having such a structure. In the compound having, in the molecule, an -O-C-N-structure, decomposition occurs at the position of a carbon atom, and is easy to be decomposed during preservation, thus the preservation stability may be reduced when the compound is contained in the ink composition, which is not preferred.

$R^3$ represents a divalent linking group, and plural $R^3$ may be the same or different. Examples of the divalent linking group represented by $R^3$ include an alkylene group, an arylene group, a heterocyclic group, and a group composed of combination thereof, and an alkylene group is preferred. When divalent linking group contains an alkylene group, the alkylene group may further contains at least one group selected from the group consisting of - O-, -S- and $-NR^a-$. $R^a$ represents a hydrogen atom or an alkyl group having a carbon number of from 1 to 4.

When $R^3$ contains an alkylene group, examples of the alkylene group include a methylene group, an ethylene group, a propylene group, a butylene group, a pentylene group, a hexylene group, a heptylene group, an octylene group, and a nonylene group. The number of carbons in the alkylene group of $R^3$ is preferably from 1 to 6, further preferably from 1 to 3, and yet further preferably 1. The alkylene group of $R^3$ may further contains at least one selected from the group consisting of-O-, -S-, and $-NR^a-$. Examples of the alkylene group containing -O- include $-C_2H_4-O-C_2H_4-$ and $-C_3H_6-O-C_3H_6-$. The alkylene group of $R^3$ may further contain a substituent, and examples of the substituent include an aryl group and an alkoxy group.

When $R^3$ contains an arylene group, examples of the arylene group include a phenylene group, and a naphthylene group. The number of carbons in the arylene group of $R^3$ is preferably from 6 to 14, further preferably from 6 to 10, and yet further preferably 6. The arylene group of $R^3$ may further contains a substituent, and examples of the substituent include an alkyl group and an alkoxy group.

When $R^3$ contains a heterocyclic group, the heterocyclic group is preferably those having 5-member or 6-member ring, and may also be those in which the rings are condensed. The heterocycle may be an aromatic heterocycle or a non-aromatic heterocycle. Examples of the heterocyclic group include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzoisothiazole, thiadiazole, isoxazole, benzisoxazole, pyrrolidine, piperidine, piperazine, imidazolidine, and thiazoline. Among these, an aromatic heterocyclic group is preferred, and pyridine, pyrazine, pyrimidine, pyridazine, triazine, pyrazole, imidazole, benzimidazole, triazole, thiazole, benzothiazole, isothiazole, benzoisothiazole, and thiadiazole are preferred. The above-mentioned heterocyclic groups are exemplified in a form in which a substitution position is omitted, and the substitution position is not limited. In a case of pyridine, substitution can be performed at 2-, 3-, or 4-position, and all these substituted pyridine may be included.

The heterocyclic group may further contain a substituent, and examples of the substituent include an alkyl

group, an aryl group, and an alkoxy group.

k in the General Formula (2) represents 2 or 3. Plural ks may be the same or different. $C_kH_{2k}$ may be a straight chain structure or a branched structure. It is noted that, in one $C_kH_{2k}O$ unit, k is the same.

x, y and z each independently represents an integer of from 0 to 6, preferably an integer of from 0 to 5, and more preferably an integer of from 0 to 3. x+y+z satisfies being in the range of from 0 to 18, preferably from 0 to 15, and more preferably from 0 to 9.

Among the above, cases in which: plural $R^1$s each independently represent a hydrogen atom or a methyl group; plural $R^2$s each independently represents an alkylene group having 2 to 4 carbon atoms; plural $R^3$s each independently represent an alkylene group having a carbon number of from 1 to 6 (preferably from 1 to 3); plural k each independently represent 2 or 3; x, y, and z are each independently represent an integer of from 0 to 6; and x + y + z satisfies from 0 to 15 are preferred.

Specific examples of the compound represented by the General Formula (2) are described below. The present invention is however not limited thereto.

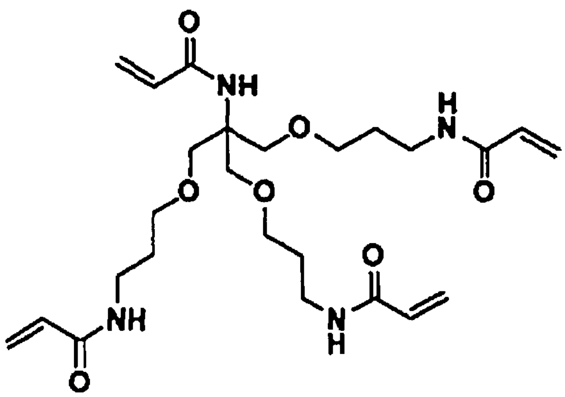

polymerizable compound a

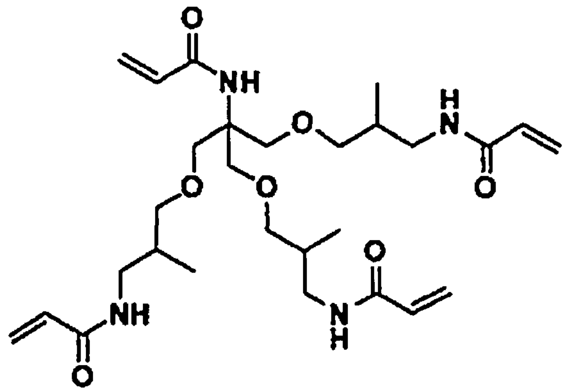

polymerizable compound b

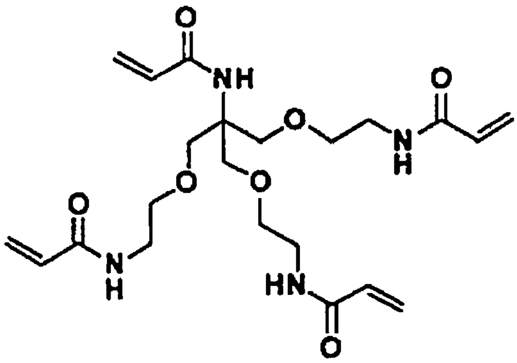

polymerizable compound c

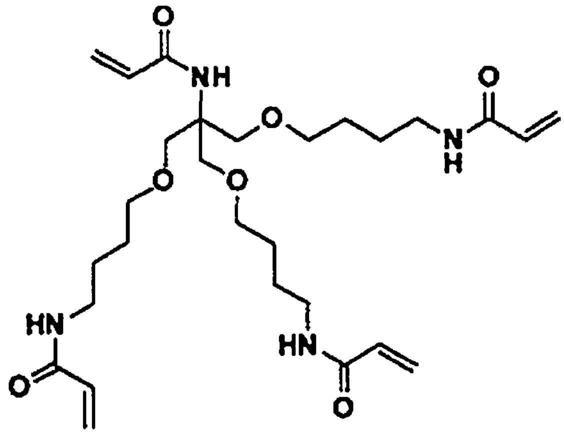

polymerizable compound d

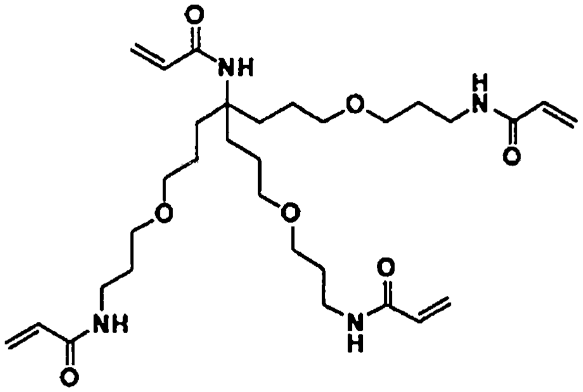

polymerizable compound e

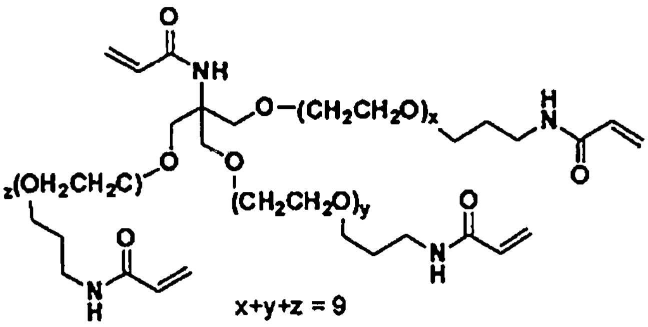


polymerizable compound f

The compound represented by the general Formula (2) can be manufactured in accordance with the scheme 1 or scheme 2 below.

scheme1

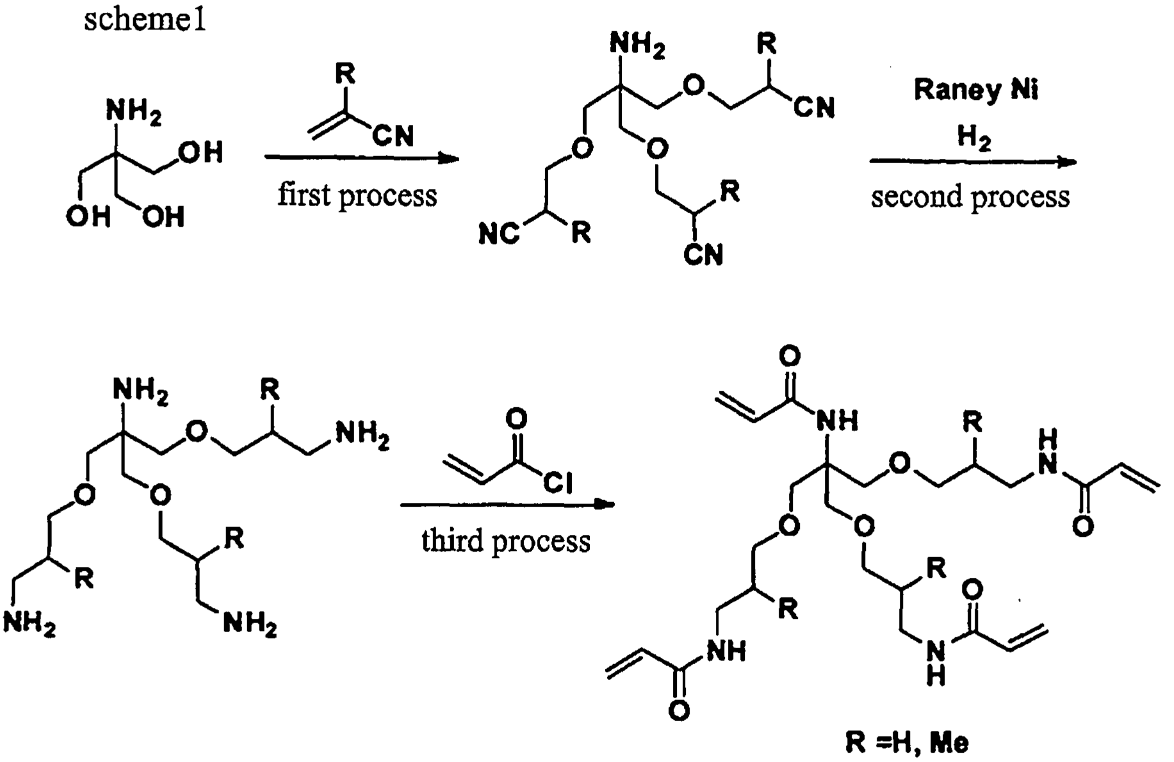


In the scheme 1, the first process is a process in which a polycyano compound is obtained by a reaction of acrylonitrile and tris-hydroxymethyl aminomethane. The reaction in the process is preferably performed at from 3 to 60°C for from 2 to 8 hours.

The second process is a process in which a polycyano compound is reacted with hydrogen under the presence of catalyst and a polyamine compound is obtained by reduction reaction. The reaction in the process is preferably performed at from 20 to 60°C for from 5 to 16 hours.

The third process is a process in which a multifunctional acrylamide compound is obtained by an acylation reaction of a polyamine compound and acrylic acid chloride or methacrylic acid chloride. The reaction of the process is preferably performed at from 3 to 25°C for from 1 to 5 hours. For the acylating agent, in place of the acid chloride, diacrylic acid anhydride or dimethacrylic acid anhydride may be employed. In the acylating process, by using both acrylic acid chloride and methacrylic acid chloride, a compound having, in the same molecule, an acrylamide structure and a methacrylamide structure can be obtained as a final product.

scheme2

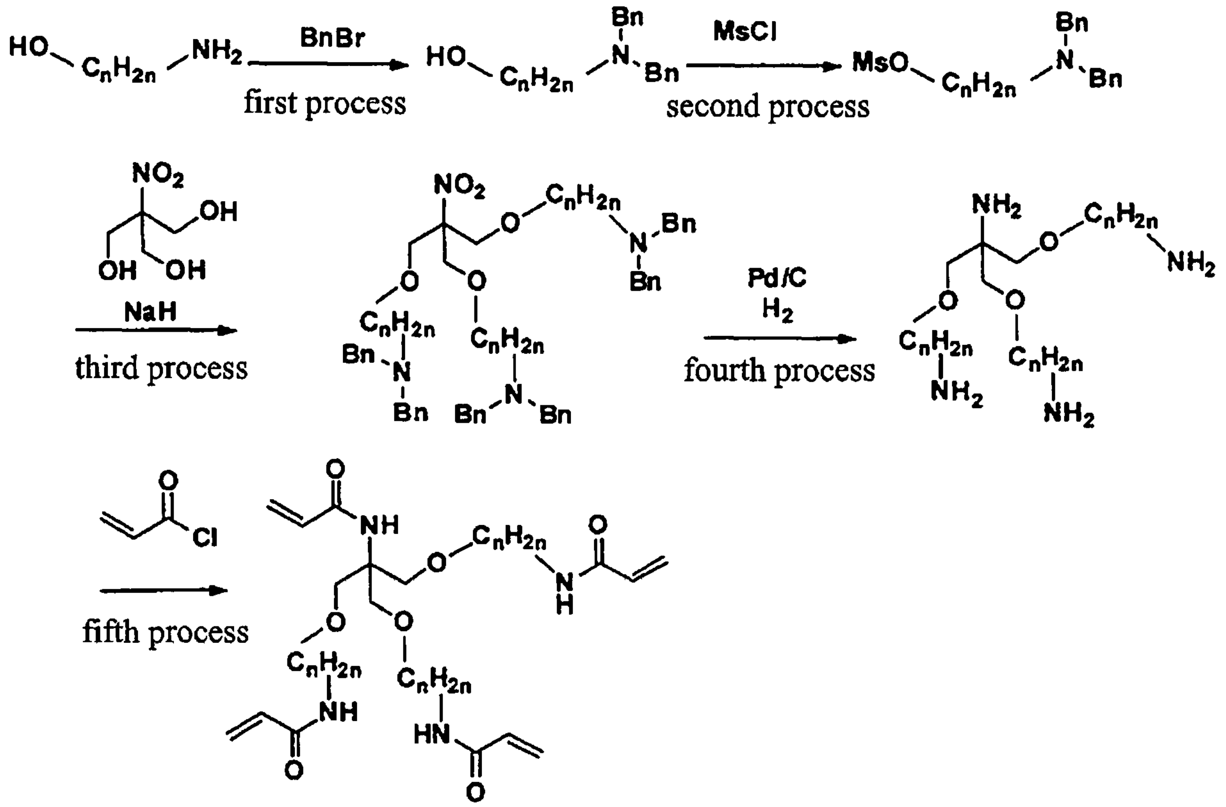


In the scheme 2, the first process is a process in which a nitrogen protected amino alcohol compound is obtained by a protecting group introducing reaction of a benzyl group, a benzyloxycarbonyl group, or the like to a nitrogen atom of an amino alcohol. The reaction of the process is preferably performed at from 3 to 25°C for from 3 to 5 hours.

The second process is a process in which a leaving group, such as a methanesulfonyl group, a p-toluene sulfonyl group or the like, is introduced to the OH group of the nitrogen protected amino alcohol compoundto obtain a sulfonyl compound. The reaction of the process is preferably performed at from 3 to 25°C for from 2 to 5 hours.

The third process is a process in which an amino alcohol adduct is obtained by a $S_N2$ reaction of a sulfonyl compound and a tris(hydroxymethyl)nitromethane. The reaction of the process is preferably performed at from 3 to 70°C for from 5 to 10 hours.

The fourth process is a process in which the amino alcohol adduct is reacted with hydrogen under the presence of catalyst and a polyamine compound is obtained by hydrogenation reaction. The reaction of the process is preferably performed at from 20 to 60°C for from 5 to 16 hours.

The fifth process is a process in which a multifunctional acrylamide compound is obtained by an acylation reaction of a polyamine compound and acrylic acid chloride or methacrylic acid chloride. The reaction of the process is preferably performed at from 3 to 25°C for from 1 to 5 hours. For the acylating agent, in place of acid chloride, dicrylic acid anhydride or dimethacrylic acid anhydride may be employed. By using, in the acylating process, both acrylic acid chloride and methacrylic acid chloride, a compound having, in the same molecule, an acrylamide structure and a methacrylamide structure can be obtained as a final product.

The compound obtained by way of the above-mentioned process can be obtained by purification of a reaction liquid product by a conventional method. For example, the compound can be purified by separation extraction using an organic solvent, crystallization using a poor solvent, column chromatography using a silica gel and the like.

The (meth)acrylamide compound of the present invention is as above described, but the ink composition of the present invention may contain another water-soluble polymerizable compound than the (meth)acrylamide compound together with the (meth)acrylamide compound.

Examples of the other water-soluble polymerizable compound include a (meth)acrylate compound and a cationic polymerizable compound. The cationic polymerizable compound is a compound including a cationic group and a polymerizable group such as an unsaturated double bond, and epoxy monomers, octacene monomers, or the like can be favorably used.

< Pigment >

The ink composition of the present invention contains at least one pigment.

The pigment is not particularly restricted, and can be appropriately selected depending on purposes, and, for example, any of an organic pigment and an inorganic pigment can be employed.

The pigment is preferably a pigment which is almost insoluble to water or poorly soluble from the viewpoint of the ink colorability.

The type of the pigment is not particularly restricted, and a conventionally known organic pigment or inorganic pigment may be used.

Examples of the organic pigment include azo pigments, polycyclic pigments, dye chelates, nitro pigments, nitroso pigments, aniline black. Among these, an azo pigment or an polycyclic pigment is more preferred. Examples of the azo pigment include azo lakes, insoluble azo pigments, condensed azo pigments, chelate azo pigments. Examples of the polycyclic pigment include phthalocyanine pigments, perylene pigments, perinone pigments, anthraquinone pigments, quinacridone pigments, dioxazine pigments, indigo pigments, thioindigo pigments, isoindolinone pigments, quinophthalone pigments. Examples of the dye chelate include basic dye type chelates and acidic dye type chelates.

Examples of the inorganic pigment include titanium oxide, iron oxide, calcium carbonate, barium sulfate, aluminum hydroxide, barium yellow, cadmium red, chrome yellow, carbon black. Among these, carbon black is particularly preferred. Examples of the carbon black include those produced according to any of known methods such as a contact method, a furnace method and a thermal method.

Specific examples of the pigment which can be used in the present invention include pigments described in paragraphs [0142] to [0145] of JP-A No. 2007-100071.

The above-mentioned pigment may be used singly, or plural types of pigments, which is selected from the same group described above or from different groups described above, may be used in combination.

From the viewpoints of the color density, graininess, ink stability, and ejectionreliability, the content of the pigment in the ink composition is preferably from 1 to 25% by mass and more preferably from 2 to 20% by mass with respect to the total mass of the ink composition.

(Dispersant)

In the ink composition of the present invention, the pigment is preferably dispersed by a dispersant. In other word, the ink composition of the present invention preferably contains at least one dispersant.

The dispersant of the pigment may be either a polymeric dispersant or a low-molecular weight surfactant-type dispersant. The polymeric dispersant may be either a water-soluble dispersant or a water-insoluble dispersant.

For the low-molecular weight surfactant-type dispersant, for example, a known low-molecular weight surfactant-type dispersant which is described in paragraphs 0047 to 0052 of JP-A No. 2011-178029 can be used.

Among the polymeric dispersants, examples of the water-soluble dispersants include a hydrophilic polymeric dispersant. Examples of the hydrophilic polymeric compound include natural hydrophilic polymeric compounds such as: plant polymers such as gum arabic, gum tragacanth, guar gum, gum karaya, locust bean gum, arabinogalactan, pectin and quince seed starch; algae polymers such as an alginic acid, carrageenan and agar; animal polymers such as gelatin, casein, albumin and collagen; and microbial polymers such as xanthene gum and dextran.

Examples of the hydrophilic polymeric compound include hydrophilic polymeric compounds obtained by modifying natural raw materials such as: fibrous polymers such as methyl cellulose, ethyl cellulose, hydroxyethyl cellulose, hydroxypropyl cellulose or carboxymethyl cellulose; starch polymers such as sodium starch glycolate, or sodium starch phosphate; and algae polymers such as sodium alginate or propylene glycol alginate.

Examples of the hydrophilic polymeric compound include synthetic hydrophilic polymeric compounds such as: vinyl polymers such as polyvinyl alcohol, polyvinyl pyrrolidone or polyvinyl methyl ether; acrylic resins such as non-bridging polyacrylamide, polyacrylic acid or an alkali metal salt thereof; water-soluble styrene maleic acid resin; water-soluble vinylnaphthalene acrylic resin; water-soluble vinylnaphthalene maleic acid resins; polyvinyl pyrrolidone; polyvinyl alcohol; alkali metal salts of formalin condensates of $\beta$-naphthalene sulfonic acid; polymeric compounds having, at a side chain, a salt of a cationic functional group such as a quaternary ammonium group or an amino group; and natural polymeric compounds such as shellac.

Among these, a water-soluble dispersant into which a carboxyl group is introduced such as a homo polymer of an acrylic acid, a methacrylic acid, or a styrene acrylic acid, or a copolymer with a monomer having another hydrophilic group is preferred as a hydrophilic polymeric compound.

Examples of the water-insoluble dispersant include a polymer having both hydrophilic and hydrophobic moieties, such as styrene-(meth)acrylic acid copolymer, styrene-(meth)acrylic acid-(meth)acrylc acid ester copolymer, (meth)acrylic acid ester-(meth)acrylic acid copolymer, polyethylene glycol(meth)acrylate-(meth)acrylic acid copolymer, vinyl acetate-maleic acid copolymer and styrene-maleic acid copolymer.

The weight-average molecular weight of the polymer dispersant is preferably from 3,000 to 100,000, more preferably from 5,000 to 50,000, further preferably from 5,000 to 40,000, and yet further preferably from 10,000 to 40,000.
The weight average molecular weight of the polymeric dispersant is measured in a similar manner to the weight average molecular weight of a specific polymer forming the above-mentioned specific polymer particle.
From the viewpoints of self-dispersibility and aggregation rate when in contact with a treatment liquid, the polymeric dispersant preferably contains a polymer including a carboxyl group, preferably a polymer including a carboxyl group and having an acid value of 100 mgKOH/g or lower, and more preferably a polymer having an acid value of from 25 mgKOH/g to 100 mgKOH/g. In particular, in cases in which the ink composition of the present invention is used together with a treatment liquid which aggregates a component in the ink composition, a polymeric dispersant including a carboxyl group and having an acid value of from 25 mgKOH/g to 100 mgKOH/g is effective. The treatment liquid will be described below.
The mixture mass ratio (p : s) of the pigment (p) and the dispersant (s) is preferably in a range of from 1 : 0.06 to 1 : 3, more preferably in a range of 1 : 0.125 to 1 : 2, and further preferably in a range of from 1 : 0.125 to 1 : 1.5.
In the present invention, in addition to the pigment, a dye may be used. When a dye is used, a water-insoluble carrier on which a dye is held may be used. As the dye, a known dye can be used without restriction, and for example, dyes described in JP-A No. 2001-115066, JP-A No. 2001-335714, and JP-A No. 2002-249677 may be favorably used. The carrier is not particularly restricted as long as the carrier is insoluble or poorly soluble to water, and may be selected from an inorganic material, an organic material, and composite materials thereof and used. The carriers described in JP-A No. 2001-181549, JP-A No. 2007-169418, and the like may be favorably used.
The carrier holding a dye (water-insoluble colored particle) can be used as an aqueous dispersion by using a dispersant. As the dispersant, the above-mentioned dispersant may be favorably used.
In the present invention, from the viewpoint of light resistance or quality of an image, the ink composition preferably contains a pigment and a dispersant, and more preferably contains an organic pigment and a polymeric dispersant, and contains as a water dispersible pigment in which at least a part of the surface of the pigment is covered with the polymeric dispersant. Yet further preferably, the ink composition contains an organic pigment and a polymeric dispersant including a carboxyl group, and contains a water dispersible pigment in which at least a part of the surface of the pigment is covered with a polymeric dispersant including a carboxyl group. From the viewpoint of the aggregability, the pigment is preferably covered with the polymeric dispersant including a carboxyl group and is water-insoluble.
The average particle diameter of the pigment in a dispersed state is preferably from 10 nm to 200 nm, more preferably from 10 nm to 150 nm, and still more preferably from 10 nm to 100 nm. When the average particle diameter is 200 nm or less, color reproducibility is excellent, and droplets ejection properties are excellent when droplets are ejected by an ink-jet method. When the average particle diameter is 10 nm or more, light-fastness is excellent. The particle diameter distribution of the color material is not particularly limited, and may be a broad particle diameter distribution or a monodispersed particle diameter distribution. It is also possible to use a mixture of two or more color materials having monodispersed particle diameter distributions.
Herein, the average particle diameter of the pigment in a dispersed state represents the average particle diameter thereof in a state of an ink, the same applies to a so-called "concentrated ink dispersion" which is in a state in which an ink is not formed.
The average particle diameter and particle diameter distribution of the pigment in a dispersed state is determined in a similar manner to the average particle diameter and particle diameter distribution of the above-mentioned specific polymer particle.

< Water >

The ink composition of the present invention contains water.
In other words, the ink composition of the present invention is an aqueous ink composition.
For water in the present invention, water which does not contain ionic impurities such as ion exchanged water or distilled water is preferably used.
The content of water in the ink composition is appropriately selected depending on purposes, and preferably from 10% by mass to 99% by mass, more preferably from 30% by mass to 90% by mass, further preferably from 30% by mass to 80% by mass, and yet further preferably from 50% by mass to 70% by mass with respect to the total amount of the ink composition.

< Water-soluble organic solvent >

The ink composition of the present invention may contain at least one water-soluble organic solvent.
Examples of the water-soluble organic solvent include: alkane diols (poly-hydric alcohols) such as glycerol, ethylene glycol, and propylene glycol; sugar alcohols; alkyl alcohols having from 1 to 4 carbon atoms such as ethanol,

methanol, butanol, propanol, and isopropanol; glycol ethers such as ethylene glycol monomethyl ether, ethylene glycol monoethyl ether, ethylene glycol mono butyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, triethylene glycol monoethyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol, dipropylene glycol monomethyl ether, dipropylene glycol monoethyl ether, dipropylene glycol mono-n-propyl ether, dipropylene glycol mono-iso-propyl ether, and tripropylene glycol monomethyl ether. These can be used singly or used in a mixture of two or more of these.

As the water-soluble organic solvent, for example, a known water-soluble organic solvent described in paragraphs 0124 to 0135 of JP-A No. 2011-074150, in paragraphs 0104 to 0119 of JP-A No. 2011-079901, or the like can be used.

In cases in which the ink composition in the present invention contains a water-soluble organic solvent, the content thereof is preferably 60% by mass or smaller, and more preferably 40% by mass or smaller with respect to the total amount of the ink composition.

< Polymerization initiator >

The ink composition of the present invention preferably contains at least one polymerization initiator.

As a result, polymerization of the (meth)acrylamide compound by an active energy ray can be started.

The polymerization initiator may be used singly or two or more thereof can be mixed and used. The polymerization initiator may be used with a sensitizer in combination.

As the polymerization initiator, a compound which can initiate a polymerization reaction of a polymerizable compound by an active energy ray may be appropriately selected and used. Examples of the polymerization initiator include a polymerization initiator which generates active species (such as radical, acid, or base) by radiation or light, or electron ray (such as photopolymerization initiator).

Examples of the photopolymerization initiator include acetophenone, 2,2-diethoxyacetophenone, p-dimethylaminoacetophenone, p-dimethylaminopropiophenone, benzophenone, 2-chlorobenzophenone, p,p'-dichlorobenzophenone, p,p'-bis-diethylaminobenzophenone, Michler's ketone, benzil, benzoin, benzoin methyl ether, benzoin ethyl ether, benzoin isopropyl ether, benzoin n-propyl ether, benzoin isobutyl ether, benzoin n-butyl ether, benzyl dimethyl ketal, tetramethylthiuram monosulfide, thioxanthone, 2-chloro thioxanthone, 2-methyl thioxanthone, azobisisobutyronitrile, benzoin peroxide, di-tert-butyl peroxide, 1-hydroxycyclohexyl phenyl ketone, 1-[4-(2-hydroxyethoxy)-phenyl]-2-hydroxy-2-methyl-1-propan-1-one, 2-hydroxy-2-methyl-1-phenyl-1-one, 1-(4-isopropylphenyl)-2-hydroxy-2-methylpropan-1-one and methylbenzoyl formate. Examples of the photopolymerization initiator also include aromatic diazonium salts, aromatic halonium salts, aromatic sulfonium salts, metallocene compounds, such as triphenylsulfonium hexafluorophosphate and diphenyliodonium hexafluoroantimonate.

When the ink composition of the present invention contains a polymerization initiator, the content of the polymerization initiator in the ink composition is preferably from 1 to 40% by mass, and more preferably from 5 to 30% by mass in terms of (meth)acrylamide compound. When the content of the polymerization initiator is 1% by mass or higher, scratch resistance of an image further improves, which is advantageous for high speed recording. On the other hand, when the content of the polymerization initiator is 40% by mass or smaller, the ink composition has an advantage in the ejection stability.

Examples of the sensitizer include amines (such as aliphatic amines, aromatic amines, or piperidine), ureas (such as allylurea or o-tolylthiourea), sulfur compounds (such as sodium diethyl dithiophosphate or soluble salts of aromatic sulfinic acid), nitrile compounds (such as N,N-disubstituted p-aminobenzonitrile), phosphorous compounds (such as tri-n-butylphosphine or netrium diethyl dithiophosphate), nitrogen compounds (such as Michler ketone, N-nitrisohydroxylamine derivatives, oxazolidine compounds, tetrahydro-1,3-oxazine compounds, or condensates of formaldehyde or acetaldehyde and diamine), chlorine compounds (such as carbon tetrachloride, or hexachloroethane), polymeric amines as the reaction products of an epoxy resin and an amine, and triethanolamine triacrylate.

The ink composition of the present invention may include a sensitizer in a range not inhibiting the advantages of the present invention.

< Surfactant >

The ink composition of the present invention may contain, as needed, at least one surfactant. The surfactant may be used, for example, as a surface tension adjuster.

As the surfactant, a compound having, in the molecule, a structure containing both a hydrophilic portion and a hydrophobic portion, or the like may be effectively used. Any of an anionic surfactant, a cationic surfactant, an amphoteric

surfactant, a nonionic surfactant, a betaine surfactant may be used. Further, the above-mentioned water-soluble polymer (polymeric dispersant) may also be used as a surfactant.

In the present invention, from the viewpoint of inhibiting ejection interference of an ink, a nonionic surfactant is preferred, and among these, acetylene glycol derivatives (acetylene glycol surfactant) are more preferred.

Examples of the acetylene glycol surfactant include an alkylene oxide adduct of 2,4,7,9-tetramethyl-5-decyn-4,7-diol or 2,4,7,9-tetramethyl-5-decyn-4,7-diol. Preferably the acetylene glycol surfactant is at least one selected from the above. Examples of commercially available product of such compounds include OLFIN E series such as E1010 manufactured by Nissin Chemical Industry Co., Ltd.

In cases in which the surfactant (a surface tension adjuster) is contained in the ink composition, from the viewpoint of favorably ejecting the ink composition by an ink-jet method, the surfactant is preferably contained in an amount in a range in which the surface tension of the ink composition can be adjusted to from 20 to 60 mN/m, and from the viewpoint of the surface tension, the range is more preferably from 20 to 45 mN/m, and further preferably from 25 to 40 mN/m.

In cases in which the ink composition of the present invention contains a surfactant, a specific amount of the surfactant is not particularly limited, and the amount is preferably from 0.1% by mass or larger, more preferably from 0.1 to 10% by mass, and further preferably from 0.2 to 3% by mass with respect to the total amount of an ink composition.

< Other components >

The ink composition in the present invention may contain another additive than the above-mentioned components. Examples of the other additive include known additives such as a polymerization inhibitor, a dryness inhibitor (wetting agent), an anti-fading agent, an emulsion stabilizer, a penetration enhancing agent, an ultraviolet absorber, an antiseptic agent, an antimildew agent, a pH adjuster, a surface tension adjuster, an anti-foam agent, a viscosity adjuster, a dispersion stabilizer, an antirust agent, and a chelating agent. Although, in general, in the case of an ink composition, these variety of additives are added directly to the ink, and in cases in which an oil dye is used as a dispersion, after the preparation of a dye dispersion, these variety of additives are added to the dispersion, these variety of additives may be added to an oil phase or a water phase at the time of preparation.

< Preferred physical properties of ink composition >

The surface tension (25°C) of the ink composition in the present invention is not particularly limited, and is preferably from 20 mN/m to 60 mN/m. More preferably, the surface tension is from 20 mN/m to 45 mN/m, and further preferably, from 25 mN/m to 40 mN/m. The surface tension of the ink composition is measured by using Automatic Surface Tensiometer CBVP-Z (manufactured by Kyowa Interface Science Co., Ltd.) under a condition of 25°C.

The viscosity of the ink composition in the present invention is not particularly limited, and the viscosity at 25°C is preferably from 1.2 mPa·s to 15.0 mPa·s, more preferably from 2 mPa•s to lower than 13 mPa·s, and further preferably from 2.5 mPa·s to lower than 10 mPa·s. The viscosity of the ink composition is measured by using VISCOMETER TV-22 (manufactured by TOKI SANGYO CO. LTD.).

The pH of the ink composition in the present invention is not particularly restricted, and, from the viewpoint of the ink stability and the aggregation rate, is preferably from pH 7.5 to pH 10, and more preferably from pH 8 to pH 9. The pH of the ink composition is measured by a pH meter (for example, Multi Water Quality Meter MM-60R manufactured by DKK-TOA CORPORATION) which is normally used.

The pH of the ink composition may be appropriately adjusted by using an acidic compound or a basic compound. As the acidic compound or the basic compound, a compound which is normally used can be used without particular restriction.

<< Image forming method >>

The image forming method of the present invention includes: an ink applying process in which the above described ink composition according to the present invention is ejected from an ink jet recording head to apply the ink composition to a recording medium to form an image; and a drying process in which the image after the ink applying process is dried. The image forming method of the present invention may include another process as needed.

< Recording medium >

The recording medium which is used in the image forming method of the present invention is not particularly limited, and a recording medium which is usually used in an ink-jet method may be used.

In the present invention, as the recording medium, a recording medium having a relatively slow permeation of

liquid is favorable.

In cases in which an image is formed on a recording medium having a relatively slow permeation of liquid, flowability of an ink composition during drying tends to be high, and aggregate unevenness of a component such as a pigment in the ink composition tends to easily occur, and therefore, when such a recording medium is used, an effect of inhibiting image deformation and an effect of inhibiting gloss unevenness by the present invention can be further noticeably obtained.

Specifically, as the recording medium having a relatively slow permeation of liquid, a recording medium including, on at least one side of a support whose main component is cellulose pulp, one or more pigment layers is favorable.

(Support)

As the support whose main component is cellulose pulp, those obtained by papermaking raw materials in which chemical pulp, mechanical pulp, waste paper recycled pulp and the like are mixed in an optional ratio and used and to which an internal sizing agent, retention aid, paper strengthening agent, or the like is added as needed by using a fourdrinier former, a gap-type twin wire former, a hybrid former in which the latter half of a fourdrinier section composed of a twin wire, or the like are used.

Here, the term "main component" refers to a component which is contained in 50% by mass or more with respect to the mass of the support.

Details of the pulp used for the support can be referred to in the description in paragraph 0024 of JP-A No. 2011-42150. For the support, a filler, internal sizing agent, or the like may be used. Details of the filler, internal sizing agent, or the like can be referred to in the description in paragraphs 0025 to 0027 of JP-A No. 2011-42150.

(Pigment layer)

The type of a pigment used for the pigment layer is not particularly restricted, and a conventionally known organic pigment and inorganic pigment may be used. Specific examples of the pigment can be referred to in the description in paragraph 0029 of JP-A No. 2011-42150, and a white inorganic pigment is preferable in view of retaining transparency of a recording medium and increasing the image density.

The pigment layer may further contain an additive such as an aqueous binder, an antioxidant, a surfactant, an antifoaming agent, a foam inhibitor, a pH modifier, a curing agent, a colorant, a fluorescent brightening agent, a preservative, and a waterproofing agent.

Examples of the aqueous binder include a water-soluble polymer such as styrene/maleic acid salt copolymer, styrene/acrylic acid salt copolymer, polyvinyl alcohol, silanol modified polyvinyl alcohol, starch, cationized starch, casein, gelatin, carboxymethylcellulose, hydroxyethyl cellulose, or polyvinyl pyrrolidone, and a water dispersible polymer such as styrene butadiene latex, or acrylic emulsion.

A method of forming the pigment layer on the support is not particularly restricted and can be appropriately selected depending on purposes. For example, the pigment layer may be formed by applying a dispersion in which a pigment is dispersed in water on a base paper and drying.

The amount of the pigment in the pigment layer is preferably in a range of from 0.1 g/$m^2$ to 20 g/$m^2$ and more preferably in a range of from 0.5 g/$m^2$ to 10 g/$m^2$. When the amount of the pigment is 0.1 g/$m^2$ or larger, the blocking resistance is favorable, and when the amount of the pigment is 20 g/$m^2$ or smaller, it is advantageous in terms of fragility. The pigment is contained in the pigment layer in an amount of preferably 10% by mass or larger, more preferably 14% by mass or larger, and further preferably 18% by mass or higher with respect to the total solid content of the pigment layer.

As the recording medium having a relatively slow permeation of liquid, a recording medium in which the amount of pure water transferred to the recording medium which is measured by a dynamic scanning liquid absorptometer is from 1 ml/$m^2$ to 15 ml/$m^2$ in a contact time of 100 ms, and from 2 ml/$m^2$ to 20 ml/$m^2$ in a contact time of 400 ms is preferred.

For example, the description of JP-A No. 2011-063001 or JP-A No. 2011-042150 can be appropriately referred to with respect to a recording medium exhibiting such physical properties.

The above-mentioned pigment layer includes a pigment and a resin binder as main components. By increasing the amount of the resin added, the amount of water transferred can be adjusted to be reduced; by increasing the amount of the pigment added, the amount of water transferred can be adjusted to be increased. By increasing the specific surface area of pigment particles contained in the pigment layer, for example, by decreasing the particle size or by using a pigment whose specific surface area is large, the amount of water transferred also can be increased.

As the recording medium including, one or more pigment layer on at least one side of a support, whose main component is cellulose pulp, for example a so-called coated paper which is used for general offset printing can be used. A coated paper is a paper in which a coating material is applied on the surface of a fine paper or a neutralized paper whose main component is cellulose and which is generally not subjected to a surface treatment to form a coating layer (pigment layer).

As the coated paper, a coating paper, lightweight coating paper, or fine coating paper can be favorably used, and a high quality image can be effectively formed on such a recording medium.

The coated paper which is commercially available can be used. For example, a coated paper for general printing can be used, and specific examples thereof include: A2 gloss paper such as "OK TOP COAT PLUS" (manufactured by Oji Paper Co., Ltd.), "AURORA COAT" (manufactured by Nippon Paper Industries Co., Ltd.), "PEARL COAT" (manufactured by Mitsubishi Paper Mills Ltd.), "S UTRILLO COAT" (DAIO PAPER CORPORATION), "MYU COAT NEOS" (Hokuetsu Paper Co., Ltd.), or "RAICHO COAT" (manufactured by Chuetsu Pulp & Paper Co., Ltd.); A2 Matte Paper such as "NEW AGE" (manufactured by Oji Paper Co., Ltd.), "OK TOP COAT MATTE" (manufactured by Oji Paper Co., Ltd.), "U-LIGHT" (manufactured by Nippon Paper Industries Co., Ltd.), "NEW V MATTE" (manufactured by Mitsubishi Paper Mills Ltd.), or "RAICHO MATTE COAT N" (manufactured by Chuetsu Pulp & Paper Co., Ltd.); A1 Gloss Art paper such as "OK KINFUJI PLUS" (manufactured by Oji Paper Co., Ltd.), "TOKUBISHI ART" (manufactured by Mitsubishi Paper Mills Ltd.), or "RAICHO SPECIAL ART" (manufactured by Chuetsu Pulp & Paper Co., Ltd.); A1 Dull Art Paper such as "SATIN KINFUJI PLUS" (manufactured by Oji Paper Co., Ltd.), "SUPER MATTE ART" (manufactured by Mitsubishi Paper Mills Ltd.), "RAICHO DULL ART "(manufactured by Chuetsu Pulp & Paper Co., Ltd.); and A0 Art Paper such as "SA KINFUJI PLUS" (manufactured by Oji Paper Co., Ltd.), "HIGH CLASS ART" (manufactured by Mitsubishi Paper Mills Ltd.), "RAICHO SUPER ART N" (manufactured by Chuetsu Pulp & Paper Co., Ltd.), "ULTRA-SATIN KINFUJI PLUS" (manufactured by Oji Paper Co., Ltd.), or "DIA PREMIER DULL ART" (manufactured by Mitsubishi Paper Mills Ltd.).

< Ink applying process >

The ink applying process in the present invention is a process in which the ink composition of the present invention is ejected from an ink jet recording head to apply the ink composition on the recording medium to form an image.

In the process, the ink composition can be selectively applied on a recording medium to form a desired visible image.

Specifically, image recording (image formation), in which an ink composition is ejected from an ink jet recording head, can be performed by providing energy to eject a liquid composition to a desired medium to be recorded such as a plain paper or a resin coating paper described, for example, in JP-A No. H08-169172, JP-A No. H08-27693, JP-A No. H02-276670, JP-A No. H07-276789, JP-A No. H09-323475, JP-A No. S62-238783, JP-A No. H10-153989, JP-A No. H10-217473, JP-A No. H10-235995, JP-A No. H10-337947, JP-A No. H10-217597, a paper for exclusive use for ink-jet described in JP-A No. Hei10-337947, film, a common usable paper for electrophotography, cloth, glass, metal, ceramics, or the like. As an ink jet recording method preferable in the present invention, a method described in paragraph 0093 to 0105 of JP-A No. 2003-306623 may be applied.

The method of ejection from an ink jet recording head is not particularly limited and may be of any known system, for example, a charge control system in which an ink is jetted utilizing an electrostatic attraction force, a drop on demand system in which a vibration pressure of a piezo element is utilized (pressure pulse system), an acoustic inkjet system in which electric signals are converted into acoustic beams, an ink is irradiated with them, and the ink is jetted utilizing a radiation pressure, and a thermal inkjet system in which an ink is heated to form bubbles and the resultant pressure is utilized (BUBBLEJET (registered trade mark)). As the ink-jet method, in particular, by the method according to JP-A-S54-59936, a method in which an ink on which an action of heat energy is applied generates an abrupt volume change, and by utilizing the acting force by the state change, ink is jetted from a nozzle, may be utilized.

Examples of the ink-jet method include a system in which a number of ink droplets of low concentration, so-called "photo-ink", each in a small volume, are jetted, a system of improving an image quality using plural inks of a substantially identical hue and of different concentrations, and a system of using a colorless transparent ink.

From the viewpoint of obtaining a high-definition image, the amount of the ink ejected from an ink jet recording head is preferably from 1 to 10 pl (pico liter) and more preferably from 1.5 to 6 pl. From the viewpoint of improving unevenness of an image and continuation of continuous gradation, it is effective to eject by combining different amounts of droplets. The present invention can be used also in such a case.

(Ink jet recording head)

An ink jet recording head in the present process is not particularly restricted, and may be an on-demand system or continuous system.

Specific examples of the ejection system for an ink from an ink jet recording head include an electric-mechanical conversion system (such as a single cavity type, a double cavity type, a bender type, a piston type, a share mode type, or a shared wall type), an electric-thermal conversion system (such as a thermal inkjet type, or a BUBBLEJET (registered trade mark) type), an electrostatic attraction system (for example, an electric field control type, and a slit jet type, etc.), and an electrical deschargesystem (such as a spark jet type) and any of the ejection systems may be used.

An ejection hole (nozzle) or the like provided on an ink jet recording head is not particularly restricted and can be appropriately selected depending on purposes.

Examples of the inkjet recording head include a short head which is used in a shuttle system in which recording is performed while moving in the width direction of a recording medium in a scanning manner and a line head on which nozzles are arranged correspondingly to the entire length of one side of a recording medium which is used in a line system.

In the line system, image recording is performed over the whole surface of a recording medium by moving the recording medium in a direction orthogonal to the direction along which the nozzles are aligned. In the line system, conveyance system, such as carriage, which moves the short head in a scanning manner is unnecessary. Since a complicated scan-movement control of the movement of the carriage and the recording medium is unnecessary and only the recording medium is moved, the recording speed can be increased compared with the shuttle system.

The image forming method of the present invention can be applied to both of these systems; effects of improving the ejection performance are large when the inkjet recording method of the present invention is applied to a line system, in which dummy jetting is not generally performed (in other words, when the ink jet recording head is a line head).

The ejection surface of an ink jet recording head in this process has water-repellent characteristics as mentioned above.

As used herein the term "water-repellency" refers to characteristics of the contact angle with water being 90° or higher (preferably 120° or higher, more preferably 150° or higher).

As an ink jet recording head in the present invention, an ink jet recording head including a nozzle plate on which plural ejection holes are two-dimensionally arranged and which is provided with a liquid-repellent film containing a fluorine compound on the ejection hole formed surface is favorably used.

For such an ink jet recording head, a known ink jet recording head described in, for example, JP-A No. 2011-111527 or JP-A No. 2011-063777 may be used.

- Liquid-repellent film containing fluorine compound -

As the fluorine compound contained in the liquid-repellent film, for example, a compound containing a fluorinated alkyl group may be favorably used.

A liquid-repellent film in the present invention is preferably, for example, a liquid-repellent film which is manufactured by using a fluorinated alkyl silane compound.

As the fluorinated alkyl silane compound, a fluorinated alkyl silane compound represented by the General Formula (F) below may be favorably used. A fluorinated alkyl silane compound represented by the General Formula (F) below is a silane coupling compound.

$$C_nF_{2n+1}\text{-}C_mH_{2m}\text{-}Si\text{-}X_3 \ldots \qquad \text{General Formula (F)}$$

In the General Formula (F), n represents an integer of 1 or greater, m represents an integer of 0 or 1 or greater. X represents an alkoxy group, an amino group, or a halogen atom. Part of X may be substituted with an alkyl group.

Examples of the fluorinated alkyl silane compound include a fluoroalkyl trichlorosilane such as $C_8F_{17}C_2H_4SiCl_3$ (also referred to as "1H,1H,2H,2H-perfluorodecyl trichlorosilane" or "FDTS"), or $CF_3(CF_2)_8C_2H_4SiCl_3$; a fluoroalkyl alkoxysilane such as $CF_3(CF_2)_8C_2H_4Si(OCH_3)_3$, 3,3,3-trifluoropropyl trimethoxysilane, tridecafluoro-1,1,2,2-tetrahydrooctyl trimethoxysilane, or heptadecafluoro-1,1,2,2-tetrahydrodecyl trimethoxysilane.

In the General Formula (F), from the viewpoints of liquid repellency and durability of a liquid-repellent film, cases in which n is an integer of from 1 to 14, m is an integer of 0 or from 1 to 5, and X is an alkoxy group or a halogen atom are preferred, and cases in which n is an integer of from 1 to 12, m is an integer of from 0 to 3, and X is an alkoxy group or a halogen atom are further preferred. Among these, $C_8F_{17}C_2H_4SiCl_3$ is most preferable.

The thickness of the liquid-repellent film containing the fluorine compound is not particularly restricted and preferably is in a range of from 0.2 to 30 nm, and more preferably in a range of from 0.4 to 20 nm. The thickness of the liquid-repellent film may be larger than 30 nm, which is not particularly problematic; however, when the thickness is not larger than 30 nm, the uniformity of the film is advantageous, and when the thickness is not smaller than 0.2 nm, the water-repellency to an ink is favorable.

As the liquid-repellent film containing the fluorine compound, for example, a monomolecular film (SAM film) of a fluorinated alkyl silane compound or a laminated film of a fluorinated alkyl silane compound may be used. Here, the laminated film of a fluorinated alkyl silane compound includes a polymerization film of a fluorinated alkyl silane compound as well as a film in which a fluorinated alkyl silane compound is not polymerized.

Among these, a monomolecular film (SAM film) of a fluorinated alkyl silane compound is preferable.

The liquid-repellent film containing a fluorine compound can be formed by a method described in, for example, JP-A No. 2011-111527 or JP-A No. 2011-063777.

The SP value of the above-mentioned liquid-repellent film containing a fluorine compound is not particularly

limited, and from the viewpoint of improving removal performance of the ink composition, the SP value calculated by the Okitsu method is preferably 16.00 $MPa^{1/2}$ or lower, more preferably 15.00 $MPa^{1/2}$ or lower, and yet further preferably 13.00 $MPa^{1/2}$ or lower.

- Nozzle plate-

The above-mentioned nozzle plate which may be used for an ink jet recording head has a constitution in which plural ejection holes are two-dimensionally arranged. The number of the plural ejection holes is not particularly restricted, and may be appropriately selected in consideration of acceleration of image formation or the like.
For the nozzle plate, a nozzle plate (hereinafter, also referred to as "silicon nozzle plate") containing a silicon is favorable.
For the silicon, a single crystal silicon or a polysilicon may be used.
For the silicon nozzle plate, those in which a film made of metal oxide (silicon oxide, titanium oxide, chromium oxide, tantalum oxide (preferably $Ta_2O_5$), or the like), metal nitride (titanium nitride, silicon nitride, or the like), metal (zirconium, chromium, titanium, or the like), or the like is provided on a silicon substrate may also be used.
Here, the silicon oxide may be an $SiO_2$ film (for example, thermal oxide film) which is formed by oxidizing the whole of or a part of the surface of the silicon substrate.
The silicon nozzle plate may be those in which a part of silicon is replaced with a glass (example: borosilicate glass, photosensitive glass, quartz glass, and soda-lime glass).

< Drying process >

The drying process in the present invention is a process in which an image after the ink applying process is dried.
Usually, in an image forming method including such a drying process, image deformation or gloss unevenness of an image is likely to occur. In the image forming method of the present invention, since the above-mentioned ink composition of the present invention is used, image deformation or gloss unevenness of an image which is likely to occur in an image forming method including a drying process is inhibited.
In the drying process, at least a part of water in an image (ink composition) formed on a recording medium is removed by drying. By providing a drying process before the below-mentioned curing process to reduce the content of water in an ink composition, acuring reaction of a polymerizable compound in a curing process proceed further preferably. Particularly in cases in which an image is formed at a high speed, for example, in a method in which an image is formed by a single pass system in which an ink is ejected in the main scanning direction, a sensitivity with which image forming properties are attained can be secured.
For example, in cases in which an image is formed at a conveying speed of a recording medium of from 100 to 3000 mm/s, an effect of the present invention is further attained, and further, in cases in which the conveying speed is from 150 to 2700mm/s, and more preferably from 250 to 2500mm/s, an excellent effect of improving the adhesion and scratch resistance by providing a drying process is obtained.
In the drying process of the present invention, water is not necessarily completely dried, and it is acceptable that water is left in an image and a pigment layer. Rather, in the drying process, it is preferable to perform drying in such a degree that water is left in a range in which UV curing reaction is not compromised.
In the drying process, preferably, at least a part of water contained in an ink composition which has been applied on a recording medium in the ink applying process is removed under a drying condition (hereinafter, also referred to as "dried amount") in which from 60 to 80% by mass of water contained in an ink composition (image) which has been applied in a maximum application amount is preferebly removed. When the amount of water removed is 60% by mass or larger, cockling is inhibited and the adhesion of an image can be favorably maintained. When the amount of water removed is 80% by mass or smaller, the adhesion of an image is favorable.
The drying condition may be set based on the maximum application amount of an ink composition in an ink applying process which is appropriately provided as needed. By removing water in an ink composition containing a pigment under such a drying condition, occurrence of cockling is inhibited, and an image having an excellent adhesion is obtained.
The dried amount in the drying process can be calculated in the following manner.
Each of the amount of water $W_0$ contained in an image which is formed of an ink in a maximum application amount without a drying process and the amount of water $W_1$ contained in an image which is formed of an ink in a maximum application amount with a drying process is measured. Next, the ratio of the difference between $W_0$ and $W_1$ with respect to $W_0$ ($(W_0 - W_1)/W_0 \times 100$ [% by mass]) is calculated to obtain a dried amount (% by mass) as the amount of water which is removed in the drying process.
The amount of water contained in an image is measured by the Karl Fischer method. For the amount of water in the present invention, a Karl Fischer Moisture Titrator MKA-520 (manufactured by Kyoto Electronics Manufacturing

Co., Ltd.) is used, and the amount of water measured in usual measurement conditions is applied.

The amount of water in an ink composition removed in a drying process (the dried amount) is preferably from 60 to 80% by mass, more preferably from 65 to 80% by mass, and further preferably from 70 to 80% by mass with respect to the total amount of water in an ink composition which is applied at a maximum application amount of 15 ml/$m^2$ or smaller from the viewpoint of keeping the curing efficiency after drying favorable.

Drying is preferably started within 5 seconds from a point in time at which the impact of a droplet of an ink composition to a recording medium is completed in the ink applying process. Here, the term "within 5 seconds from a point in time at which the impact is completed" means that air is blown to the image of the ink droplet or heat is applied to the image of the ink droplet within 5 seconds from a point in time at which the impact of an ink droplet is completed. For example, by conveying a recording medium into the drying region within 5 seconds from a point in time at which the impact of an ink droplet is completed, drying is started within 5 seconds from a point in time at which the impact is completed.

Time between a point in time at which the impact of an ink droplet is completed and the start of drying is more preferably 3 seconds or shorter.

Drying can be performed by a heating means in which heating is performed by a heating element such as a nichrome wire heater, an air blowing means in which air blowing of a dryer or the like is utilized, or a means in which these means are combined.

Examples of the heating mean include a method in which a heat is applied from the opposite side of the surface of the recording medium on which an image is formed, a method in which a warm air or a hot air is applied to the side of the surface of a recording medium on which an image is formed, or a heating method in which an infrared heater is used. Heating may also be performed by combining these methods.

< Treatment liquid applying process >

The image forming method of the present invention preferably includes a treatment liquid applying process in which a treatment liquid containing an aggregating component which forms aggregation when in contact with an ink composition of the present invention is applied to a recording medium.

When the image forming method includes this process, the ink composition of the present invention contacts the above-mentioned treatment liquid on a recording medium to form an aggregate generated by aggregation of a component such as a pigment in the ink composition, whereby an image is immobilized on the recording medium. By using the treatment liquid together with the ink composition to form an image, ink jet recording can be performed at high speed, and an image having a high drawing performance of the density and resolution (for example, reproducibility of a thin line or minute portion) can be obtained even the image is recorded at a high speed.

Details of the treatment liquid will be described below.

The treatment-liquid applying process may be performed before or after the above-mentioned ink applying process. In the present invention, it is preferable to perform the above-mentioned ink applying process before the above-mentioned treatment-liquid applying process.

Specifically, preferably, the treatment liquid is applied on the recording medium prior to applying the ink composition, and the ink composition is applied so as to contact with the treatment liquid provided on the recording medium, whereby an image is formed. Thereby, ink jet recording can be performed at higher speed, and an image having high density and resolution is obtained even when recording is performed at a high speed.

Application of the treatment liquid can be performed using a known method, such as a coating method, an inkjet method, or an immersion method. The coating method may be a known coating method using a bar coater, an extrusion die coater, an air doctor coater, a blade coater, a rod coater, a knife coater, a squeeze coater, a reverse roll coater, or the like. Details of the ink-jet method are as described above.

The application amount of the treatment liquid in the treatment liquid applying process is not particularly restricted as long as the ink composition is allowed to aggregate, and preferably, the amount of aggregating component to be applied may be 0. 1g/$m^2$ or larger. Among these, the amount of aggregating component to be applied is preferably from 0.2 to 0.7g/$m^2$. When the amount of the aggregating component to be applied is 0.1g/$m^2$ or larger, a favorable high speed aggregability can be maintained depending on a variety of use forms of the ink composition. That the amount of the aggregating component to be applied is 0.7g/$m^2$ or smaller is preferable because the surface nature of a recording medium on which the ink component is applied is not adversely affected (change of gloss or the like).

In the present invention, preferably, the ink applying process is performed after the treatment liquid applying process, and a heat drying process in which the treatment liquid on a recording medium is heated and dried is further performed after the treatment liquid is applied on the recording medium and before the ink composition is applied. By heat drying the treatment liquid before the ink applying process in advance, the ink colorability such as bleeding-resistance becomes favorable, and a visible image having a favorable color density and hue can be recorded.

Heat drying may be performed by a known heating means such as a heater, an air blowing means utilizing air

blowing of a dryer or the like, or by the means in combination. Examples of heating method include a method for supplying heat with a heater or the like from the opposite side of the surface of the recording medium onto which the treatment liquid is applied, a method for applying warmed air or hot air to the surface of the recording medium onto which the treatment liquid is applied, and a heating method using an infrared heater or the like. Heating may be performed by combining these methods.

(Treatment liquid)

The treatment liquid of this process contains at least one aggregating component which forms aggregate when in contact with the ink composition of the present invention.

The aggregating component, may be a compound which can change the pH of the ink composition, a multivalent metal salt, or a cationic polymer. In the present invention, from the viewpoint of the aggregability of the ink composition, a compound which can change the pH of the ink composition is preferred, and a compound which can decrease the pH of an ink composition is more preferred.

Examples of the compound which can decrease the pH of the ink composition include an acid (acidic substance).

Examples of the acid favorably include sulfuric acid, hydrochloric acid, nitric acid, phosphoric acid, poly acrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, or derivatives thereof, or salts thereof.

The acid may be used singly, or two or more acids may be used in combination.

In cases in which the treatment liquid contains an acid, the pH(25°C) of the treatment liquid is preferably 6 or lower, more preferably 4 or lower, further preferably in a range of from 1 to 4, and yet further preferably from 1 to 3.

In this case, the pH (25°C) of the ink composition is preferably 7.5 or higher (more preferably 8.0 or higher).

Among these, from the viewpoints of image density, resolution, and speeding up of ink jet recording, preferably the pH (25°C) of the ink composition is 8.0 or higher and the pH (25°C) of the treatment liquid is from 0.5 to 4.

Among these, the aggregating component of the present invention is preferably an acid having a high water-solubility, and from the viewpoints of increasing aggregability and immobilizing the whole ink, preferably an organic acid, more preferably a divalent or higher valent organic acid, and yet further preferably a divalent or trivalent acidic substance. As the divalent or higher valent organic acid, an organic acid having a first pKa of 3.5 or smaller is preferred, and an organic acid having a first pKa of 3.0 or smaller is more preferred. Specific examples thereof favorably include phosphoric acid, oxalic acid, malonic acid, and citric acid.

For the multivalent metal salt or cationic polymer which can be used as the aggregating component, a multivalent metal salt or cationic polymer described, for example, in paragraphs 0155 to 0156 of JP-A No. 2011-042150 can be used.

The aggregating component may be used singly or two or more thereof may be mixed and used.

The content of the aggregating component in the treatment liquid is preferably in a range of from 1 to 50% by mass, more preferably in a range of from 3 to 45% by mass, and further preferably in a range of from 5 to 40% by mass.

At least one of the treatment liquid and the above-mentioned ink composition in the present invention may contain at least one polymerization initiator. A preferable range of the polymerization initiator is as mentioned above.

The treatment liquid may further contain other additives as still other components without compromising the effect of the present invention. Examples of the other additive include known additives such as a dryness inhibitor (wetting agent), an anti-fading agent, an emulsion stabilizer, a penetration enhancing agent, a UV absorber, a preservative, an antimildew agent, a pH adjuster, a surface tension adjuster, an anti-foam agent, a viscosity adjuster, a dispersant, a dispersion stabilizer, an antirust agent, and a chelating agent.

< Curing process >

In the image forming method of the present invention, a curing process in which a dried image is irradiated with an active energy ray to cure the image is preferably included, and preferebly performed after the above-mentioned drying process (a process in which an image which has been subjected to an ink applying process is dried).

Examples of the active energy ray used in the process includea-ray,γ-ray, electron ray, X-ray, ultraviolet, visible light, and infrared light. Among these, ultraviolet is preferred.

By a curing process, a monomer component (a polymerizable compound) in an image can be surely polymerized and cured. In this case, when a light source which emits an active energy ray is arranged opposed to a recording surface of a recording medium, whereby the whole recording surface is irradiated with the active energy ray, the whole image can be cured. For the light source which emits the active energy ray, an ultraviolet irradiation lamp, a halogen lamp, a

high-pressure mercury lamp, a laser, an LED, an electron beam irradiation apparatus, or the like may also be employed.

Irradiation condition of the active energy ray is not particularly restricted as long as the polymerizable compound containing the (meth)acrylamide compound can be polymerized and cured. The wavelength of an active energy ray is preferably, for example, from 200 to 600 nm, and more preferably from 300 to 450nm, and further preferably from 350 to 420 nm.

The output power of the active energy ray is preferably 5000 $mJ/cm^2$ or lower, more preferably from 10 to 4000 $mJ/cm^2$, and further preferably from 20 to 3000 $mJ/cm^2$.

< Ink jet recording apparatus >

Next, one example of an ink jet recording apparatus suitable for carrying out the image forming method of the present invention will be described with reference to Fig. 1. Fig. 1 is a schematic block diagram illustrating a configuration example of the whole ink jet recording apparatus.

As shown in Fig. 1, in the ink jet recording apparatus, a treatment liquid applying unit 12 provided with a treatment liquid ejection head 12S which ejects a treatment liquid, a treatment liquid drying zone 13 provided with a heating means (not illustrated) which dries the applied treatment liquid, an ink ejection unit 14 which ejects a variety of ink compositions, and an ink drying zone 15 which dries the ejected ink composition are arranged sequentially in the order mentioned above in a direction (an arrow direction in the figure) in which a recording medium is conveyed. On the downstream of the ink drying zone 15 in the direction in which a recording medium is conveyed, an ultraviolet irradiation unit 16 provided with an ultraviolet irradiation lamp 16S is arranged.

The recording medium supplied to the ink jet recording apparatus is sent from a paper feeder which feeds a recording medium from a case filled with recording media by a conveying roller to the treatment liquid applying unit 12, treatment liquid drying zone 13, ink ejection unit 14, ink drying zone 15, and ultraviolet irradiation unit 16 in this order to be collected in a collecting unit. For conveying a recording medium, other than a method by a conveying roller, a drum conveyor system which uses a drum-shaped member, a belt-conveyor system, a stage conveyor system which uses a stage, or the like may also be employed.

At least one of the plural arranged conveying rollers may be a driving roller to which a power of a motor (not illustrated) is transferred. By rotating a driving roller which rotates by a motor at a constant speed, a recording medium is conveyed in a predetermined direction in a predetermined conveying amount.

The treatment liquid applying unit 12 is provided with the treatment liquid ejection head 12S which is connected to a storage tank which stores a treatment liquid. The treatment liquid ejection head 12S ejects a treatment liquid from a ejection nozzle which is arranged opposed to the recording surface of a recording medium to apply a treatment liquid droplet on a recording medium. The treatment liquid applying unit 12 is not limited to a system in which ejection is performed from a nozzle head, and an application system in which an application roller is used may also be employed. In this application system, a treatment liquid can be easily applied to a substantially whole surface of a recording medium including an image region on which an ink droplet impacts by the ink ejection unit 14 arranged on the downstream side. In order to make the thickness of the treatment liquid on a recording medium constant, a method such as using an air knife, or providing a member having an acute angle such that a gap corresponding to a prescribed amount of the treatment liquid may be provided between the member and a recording medium.

On the downstream in the recording medium conveying direction of the treatment liquid applying unit 12, the treatment liquid drying zone 13 is arranged. The treatment liquid drying zone 13 may be provided with a known heating means such as a heater, an air blowing means which utilizes air blowing such as a dryer, or a means of a combination thereof. Examples of the heating mean include a method in which a heating element such as a heater is provided on the opposite side (for example, below a conveying mechanism on which a recording medium is placed and by which the recording medium is conveyed in cases in which a recording medium is automatically conveyed) of a treatment liquid application surface of a recording medium, a method of applying a warm air or a hot air on a treatment liquid application surface of a recording medium, and a heating method which uses an infrared heater. Heating may be performed by combining these methods.

Since the surface temperature of a recording medium varies depending on the type (material, thickness, or the like) of the recording medium, the environmental temperature, or the like, preferably, a measurement unit which measures the surface temperature of the recording medium, and a control mechanism in which the value of the surface temperature of the recording medium which has been measured in the measurement unit is fed back to a heating control unit are provided to control the temperature while forming a blocking layer. As the measurement unit which measures the surface temperature of a recording medium, a contact or noncontact thermometer is preferred.

A solvent may be removed by using a solvent removing roller. In another embodiment, a system in which a surplus solvent is removed from a recording medium using an air knife may be also used.

The ink ejection unit 14 is arranged on the downstream in the recording medium conveying direction of treatment liquid drying zone 13. In the ink ejection unit 14, recording heads (ink discharging heads) 30K, 30C, 30M, and 30Y which

are connected to ink storage units storing black (K), cyan (C), magenta (M), and yellow (Y) inks, respectively are arranged. The ink storage unit which is not illustrated stores an ink composition corresponding to each hue, and each ink composition is supplied to each of the ink ejection heads, 30K, 30C, 30M, and 30Y when an image is recorded as needed. On the downstream in the conveying direction of the ink discharging heads 30K, 30C, 30M, and 30Y, as shown in Fig. 1, special color ink ejection recording heads 30A and 30B may also be further arranged so as to eject the special color ink as needed.

Although in Fig. 1, recording heads 30K, 30C, 30M, 30Y, 30A, and 30B are arranged in the order mentioned, the arrangement of the color recording heads in the ink ejection g unit 14 is not limited to this order, and may be appropriately changed.

The ink discharging heads 30K, 30C, 30M, and 30Y eject an ink respectively corresponding to an image from an ejection nozzle which is arranged opposed to the recording surface of a recording medium. Thereby, each color ink is applied on the recording surface of a recording medium and a color image is recorded.

Each of the treatment liquid ejection head 12S and the ink ejection heads 30K, 30C, 30M, 30Y, 30A, and 30B is a full-line head on which a large number of ejection ports (nozzles) are arranged across the maximum recording width of an image which is recorded on a recording medium. In this form, image recording on a recording medium can be carried out at higher speed compared to serial-type recording in which recording is carried out using a short-length shuttle head that reciprocates in the width direction of the recording medium (in a direction that is perpendicular to the conveyance direction of the recording medium on a surface of the recording medium) in a scanning manner. In the present invention, either of above serial-type recording method or a recording method capable of recording at relatively high speed, such as a recording method in which recording can be performed by ejecting in a main scanning direction with single path in which one line is formed by one scanning, may be employed. In the image recording method of the present invention, a high-quality image having high reproducibility can be obtained even in the single-path method.

In this embodiment, all of the treatment liquid ejection head 12S, and the ink ejection head 30K, 30C, 30M, 30Y, 30A, and 30B have the same structure.

It is prefereble that the application amount of the treatment liquid and the application amount of the ink composition are adjusted in accordance with the necessity. For example, the amount of the treatment liquid may be changed according to the type of the recording medium, in order to, for example, adjust the properties such as viscoelasticity of the aggregates formed upon mixing of the treatment liquid and the ink composition.

The ink drying zone 15 is arranged on the downstream of the ink discharging unit 14 in the conveyance direction of a recording medium. The ink drying zone 15 may have a structure similar to that of treatment liquid drying zone 13.

The ultraviolet irradiation unit 16 is arranged further to a downstream side of the ink drying zone 15 in the recording medium conveying direction, emits an ultraviolet ray using the ultraviolet irradiation lamp 16S which is provided in the ultraviolet irradiation unit 16, and polymerizes and cures the monomer components in the image after the drying of the image. In the the ultraviolet irradiation lamp 16S, the whole recording surface is irradiated using a lamp which is arranged opposed to the recording surface of the recording medium and the whole image can be cured. The ultraviolet irradiation unit 16 is not limited to the ultraviolet irradiation lamp 16S, and a halogen lamp, high-pressure mercury lamp, a laser, a LED, an electron irradiation apparatus, or the like can also be adopted.

The ultraviolet irradiation unit 16 may be arranged either before or after the ink drying zone 15 and may be arranged both before and after the ink drying zone 15.

In addition, a heating means to carry out a heating treatment on a recording medium may be arranged in the conveying path from a paper feeder to a collecting unit in the ink jet recording apparatus. For example, by arranging the heating means in a desired position such as the upstream side of the treatment liquid drying zone 13 or between the ink ejection unit 14 and the ink drying zone 15, drying and fixing can be effectively performed by increasing the temperature of the recording medium to a desired temperature.

<< Ink set for ink jet recording >>

The ink set for ink jet recording (hereinafter, also simply referred to as "ink set") of the present invention includes at least one of the above-mentioned ink compositions of the present invention, and at least one treatment liquid which contains an aggregating component which forms an aggregate when in contact with an ink composition.

The ink composition and treatment liquid are as mentioned above, and the preferable range is also similar as mentioned above.

The ink set of the present invention may contain the ink composition of the present invention singly, or may contain two or more thereof (for example, may contain two or more ink compositions having hues which are different from each other).

The ink set of the present invention may include an ink composition other than the above-mentioned ink composition in the present invention. The other ink composition is not particularly limited, and preferably an ink composition which can be aggregated by a treatment liquid, and more preferably an ink composition which contains a water dispersible pigment in which at least part of the surface of the pigment is covered with a polymeric dispersant and water.

For example, when the ink set of the present invention contains two or more ink compositions including the ink composition in the present invention having hues which are different from each other, a multicolor image can be favorably formed.

Examples

In the following, the present invention will be described in further details with reference to the examples as long as the gist of the invention is retained. However, the present invention is not limited to these examples. Moreover, the term "part" and "%" are in terms of mass unless otherwise noted.

<< Preparation of aqueous ink >>

As aqueous inks, cyan inks C-1 to C-27 as shown in the Table 2 below and magenta inks M-1 to M-27 as shown in the Table 3 below were prepared.
In the following, detailed operations will be described.

< Preparation of cyan ink C-1 >

(Preparation of cyan dispersion)

Into a reaction vessel, 6 parts of styrene, 11 parts of stearyl methacrylate, 4 parts of styrene macromer AS-6 (manufactured by Toagosei Co., Ltd.), 5 parts of BLENMER PP-500 (manufactured by NOF Corporation), 5 parts of methacrylic acid, 0.05 parts of 2-mercaptoethanol, and 24 parts of methyl ethyl ketone were added to prepare a mixed solution.
On the other hand, into a dropping funnel, 14 parts of styrene, 24 parts of stearyl methacrylate, 9 parts of styrene macromer AS-6 (manufactured by Toagosei Co., Ltd.), 9 parts of BLENMER PP-500 (manufactured by NOF Corporation), 10 parts of methacrylic acid, 0.13 parts of 2-mercaptoethanol, 56 parts of methyl ethyl ketone, and 1.2 parts of 2,2'-azobis(2,4-dimethylvaleronitrile) were added to prepare a mixed solution.
Next, the mixed solution in the reaction vessel was heated to 75°C while being stirred under a nitrogen atmosphere, and the mixed solution in the dropping funnel was slowly added dropwise over one hour. Two hours after the completion of dropwise addition, a solution in which 1.2 parts of 2,2'-azobis(2,4-dimethylvaleronitrile) was dissolved in 12 parts of methyl ethyl ketone was added dropwise thereto over 3 hours and was aged for two hours at 75°C, aged for two hours at 80°C to obtain a polymer dispersant solution.
A portion of the obtained polymer dispersant solution was isolated by removing a solvent, the obtained solid content was diluted with tetrahydrofuran to be 0.1% by mass, and the weight average molecular weight of the polymer dispersant was measured by linking three columns, TSKgeL Super HZM-H, TSKgeL Super HZ-4000, and TSKgeL Super HZ-2000 (manufactured by Tosoh Corporation) in series and using a high-speed GPC (gel permeation chromatography) HLC-8220 GPC. As the result, the weight average molecular weight was 25,000 in terms of polystyrene. The acid value was 80 mgKOH/g.
Next, 5.0 g of the above-mentioned polymeric dispersant solution in terms of solid content, 10.0 g of Pigment Blue 15 : 3 (manufactured by Dainichiseika Color & Chemicals Manufacturing Co., Ltd.) as a cyan pigment, 40.0 g of methyl ethyl ketone, 8.0 g of 1 mol/L (liter; the same hereinafter) of sodium hydroxide, and 82.0 g of ion-exchanged water were placed in a vessel together with 300 g of 0.1 mm zirconia beads, and the obtained mixture was dispersed for six hours at 1000 rpm with a Ready Mill Disperser (manufactured by IMEX Co., ltd.). The obtained dispersion was concentrated in an evaporator under reduced pressure until methyl ethyl ketone was able to be sufficiently removed and was further concentrated until the concentration of the water dispersible pigment was 20 mass % to prepare a cyan dispersion liquid in which the water dispersible pigment was dispersed.
The volume average particle diameter (secondary particles) of the obtained cyan dispersion measured by a dynamic light scattering method using a MICROTRAC particle diameter distribution analyzer (Version 10.1.2-211BH (trade name) manufactured by NIKKISO Co., Ltd.) was 77 nm .

(Preparation of aqueous dispersion of self-dispersing polymer particle P-1)

In a 2L three-necked flask equipped with a mechanical stirrer, a thermometer, a reflux condenser, and a nitrogen gas introduction tube, 560.0 g of methyl ethyl ketone was placed, and was heated to 87°C under a nitrogen atmosphere. While maintaining a refluxing state in the reaction container(hereinafter, refluxing until the reaction was terminated), a mixed solution of 522.0 g of methyl methacrylate (in the Table 1, corresponding to "non-polar monomer A"),
58.0 g of methacrylic acid (in the Table 1, corresponding to "polar monomer"), 108 g of methyl ethyl ketone and 2.54 g

of "V-601" (manufactured by Wako Pure Chemical Industries Ltd.) was added dropwise into the flask at a constant rate such that the dropwise addition was completed in three hours. After the dropwise addition was completed, (1) a solution of 1.27 g of "V-601" and 6.4 g of methyl ethyl ketone was added into the flask, and the contents of the flask were stirred for 2 hours. Thereafter, the process (1) was repeated four times, and a solution of 1.27 g of "V-601" and 6.4 g of methyl ethyl ketone was further added, and the contents of the flask were stirred for 3 hours. Then, a polymer solution containing a methyl methacrylate /methacrylic acid (= 90/10 [mass ratio]) copolymer was obtained.

The weight average molecular weight (Mw) of the obtained copolymer (polymer) was 56000 (obtained using gel permeation chromatography (GPC) and calculated in terms of polystyrene, columns used were TSKgel Super HZM-H, TSKgel Super HZ4000, and TSKgel Super HZ200 (manufactured by Tosoh Corporation)).

- Phase inversion process -

Then, 291.6 g (solid content concentration: 44.0%) of the obtained polymer solution was weighed, and 82.5 g of isopropanol, 2.57 g of 20% maleic acid aqueous solution (corresponding to 0.4% with respect to water-soluble electrolyte and copolymer), and 90.14 g of 1 mol/L NaOH aqueous solution were added to the polymer solution, and then the temperature inside the reaction vessel was elevated to 87°C. Thereafter, 352 g of distilled water was added dropwise into the reaction vessel at a rate of 10 ml/min to be dispersed in water(dispersing process). The temperature in the reaction vessel was maintained at 87°C for 1 hour, and then 91°C for 1 hour, and then 95°C for 30 minutes under atmospheric pressure. Subsequently, the inside of the reaction vessel was depressurized, and the isopropanol, the methyl ethyl ketone, and the distilled water were removed in a total amount of 312.0 g (solvent removing process). As a result, an aqueous dispersion of self-dispersing polymer P-1 (polymer particle) having a solid content concentration (self-dispersing polymer particle concentration) of 25.3% by mass was obtained.

- Measurement of glass transition temperature (Tg) of self-dispersing polymer particle P -1

The glass transition temperature (Tg) of the above-mentioned self-dispersing polymer particle P-1 was measured in the following method and the temperature was 115°C.

Specifically, an aqueous dispersion of self-dispersing polymer particle P-1 having a solid content of 0.5 g was dried undera reduced pressure at 50°C for 4 hours to obtain a polymer solid content. The obtained polymer solid content was used to measure the Tg with a differential scanning calorimetry (DSC) EXSTAR6220 manufactured by SII NanoTechnology Inc. For the measurement conditions, employed were: 5 mg of a sample was hemetically sealed in an aluminum pan; the value of peak top of DSC of measurement data at the time when the second elevation of the temperature under a nitrogen atmosphere in the following temperature profile was set to Tg
30°C → -50°C (cooling at 50°C/min)
-50°C → 120°C (warming at 20°C/min)
120°C → -50°C (cooling at 50°C/min)
-50°C → 120°C (warming at 20°C/min)

(Preparation of cyan ink C-1)

The component of the composition below were mixed and filtered using a glass filter (GS-25) manufactured by Advantec, Toyo Roshi Kaisha Ltd., followed by filtration by a filter (PVDF film, pore size: 51μm) manufactured by Millipore Corporation to obtain cyan ink C-1.

- Composition of cyan ink C-1 -

- the above-mentioned cyan dispersion
  ... 10% by mass
- the below-mentioned polymerizable compound J-1 (hydroxyethyl acrylamide)
  ... 15% by mass
- the below-mentioned polymerizable compound J-3 (tetra-functional acrylamide) ... 10% by mass
- IRGACURE 2959 (manufactured by BASF Japan, Co., Ltd.; photopolymerization initiator)
  ... 1.5% by mass
- aqueous dispersion of self-dispersing polymer particle P-1
  ... 7.1% by mass
- OLFIN E1010 (manufactured by Nissin Chemical Industry Co., Ltd.; surfactant)

... 1% by mass

- Ion exchanged water

  ... Balance which is added to the amount of the other components to account for the total of 100% by mass

< Preparation of cyan inks C-2 to C-27 >

(Preparation of aqueous dispersion of self-dispersing polymers P-2 to P-19)

Aqueous dispersion (each self-dispersing polymer particle concentration was 25.3% by mass) of self-dispersing polymer particles P-2 to P-19 was prepared in a similar manner to the preparation of the aqueous dispersion of the self-dispersing polymer particle P-1 except that the type of monomer components and the copolymerization ratio were changed as shown in the Table 1 below.

Table 1

| No. | Self-dispersing polymer particle | | | | | | | | | | |
|---|---|---|---|---|---|---|---|---|---|---|---|
| | Non-polar monomer A | | Non-polar monomer B | | Polar monomer | Copolymerization ratio (% by mass) | | | Mw | Tg (°C) | Notes |
| | Type | SP value | Type | SP value | Type | non-polar monomer A | non-polar monomer B | polar monomer | | | |
| P-1 | MMA | 19.5 | - | - | MAA | 90 | - | 10 | 56000 | 115 | Present invention |
| P-2 | PEMA | 20.2 | - | - | MAA | 90 | - | 10 | 62000 | 48 | Present invention |
| P-3 | BzMA | 20.2 | - | - | MAA | 90 | - | 10 | 58000 | 66 | Present invention |
| P-4 | MMA | 19.5 | PEMA | 20.2 | MAA | 75 | 15 | 10 | 57000 | 102 | Present invention |
| P-5 | MMA | 19.5 | PEMA | 20.2 | MAA | 50 | 40 | 10 | 68000 | 82 | Present invention |
| P-6 | MMA | 19.5 | PEMA | 20.2 | MAA | 45 | 45 | 10 | 63000 | 78 | Present invention |
| P-7 | MMA | 19.5 | BzMA | 20.2 | MAA | 75 | 15 | 10 | 62000 | 105 | Present invention |
| P-8 | MMA | 19.5 | BzMA | 20.2 | MAA | 50 | 40 | 10 | 71000 | 91 | Present invention |
| P-9 | MMA | 19.5 | BzMA | 20.2 | MAA | 20 | 70 | 10 | 52000 | 76 | Present invention |
| P-10 | MMA | 19.5 | GMA | 23.7 | MAA | 75 | 15 | 10 | 62000 | 104 | for reference |
| P-11 | MMA | 19.5 | HEMA | 22.9 | MAA | 75 | 15 | 10 | 72000 | 111 | for reference |
| P-12 | MMA | 19.5 | EMA | 19.0 | MAA | 75 | 15 | 10 | 58000 | 109 | for reference |
| P-13 | MMA | 19.5 | iPMA | 18.0 | MAA | 75 | 15 | 10 | 53000 | 111 | Comparative |
| P-14 | MMA | 19.5 | EHMA | 17.3 | MAA | 75 | 15 | 10 | 55000 | 90 | Comparative |
| P-15 | MMA | 19.5 | iDMA | 16.5 | MAA | 75 | 15 | 10 | 61000 | 80 | Comparative |
| P-16 | MMA | 19.5 | - | - | AA | 90 | - | 10 | 63000 | 105 | Comparative |
| P-17 | MA | 19.7 | - | - | AA | 90 | - | 10 | 66000 | 17 | Comparative |
| P-18 | MMA | 19.5 | PEMA | 20.2 | AA | 75 | 15 | 10 | 53000 | 93 | Comparative |
| P-19 | MA | 19.7 | PEA | 20.4 | AA | 75 | 15 | 10 | 73000 | 12 | Comparative |

In Table 1, self-dispersing polymer particles P-10 to P-12 do not fall under the scope of the present invention and are regarded as Reference Examples.

- Notes for Table 1 -

- The unit for SP value is $MPa^{1/2}$.
- Mw represents weight average molecular weight.
- The correspondence of each abbreviation to the name of a compoundis as shiwn below.
  MMA ... methyl methacrylate
  PEMA ... phenoxy ethyl methacrylate
  BzMA ... benzyl methacrylate
  GMA ... glycidyl methacrylate
  HEMA ... hydroxyethyl methacrylate
  EMA ... ethyl methacrylate
  iPMA ... isopropyl methacrylate
  EHMA ... 2-ethyl hexyl methacrylate
  iDMA ... isodecyl methacrylate
  PEA ... phenoxy ethyl acrylate
  MA ... methyl acrylate
  MAA ... methacrylic acid
  AA ... acrylic acid

(Preparation of cyan inks C-2 to C-27)

Cyan inks C-2 to C-27 were prepared in a similar manner to the preparation of the cyan ink C-1 except that the composition was changed as shown in the Table 2 below.
Polymerizable compounds J-1 to J-4 in the Table 2 and Table 3 below are the compounds mentioned below.
The polymerizable compound J-3 was synthesized in the following manner.

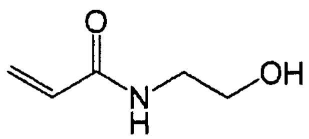

J－1

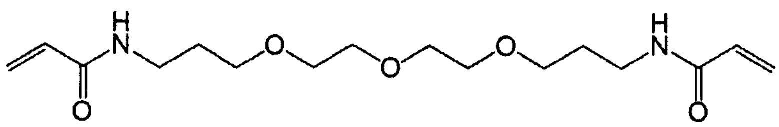

J－2

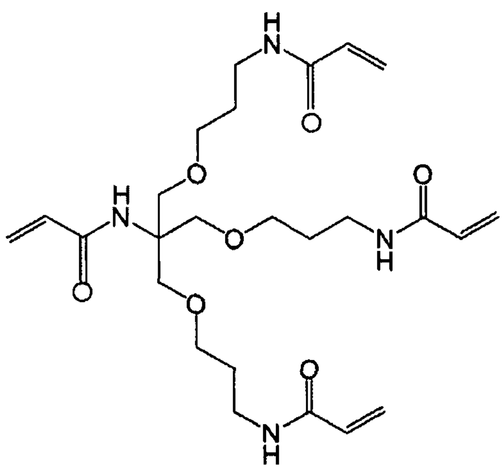

J－3

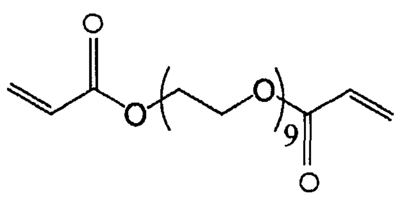

J－4

(Synthesis of polymerizable compound J-3)

- First process -

Into a 1L three-necked flask provided with a stirrer bar, 121 g of tris(hydroxymethyl)aminomethane (manufactured by Tokyo Chemical Industry Co., Ltd.) (1 eq), 84 ml of 50% by mass of aqueous potassium hydroxide, and 423 ml of toluene were added and stirred, and then, while maintaining the reaction system at from 20 to 25°C in a water bath, 397.5 g of acrylonitrile (7.5 eq) was added dropwise thereto over 2 hours. After the addition, the mixture was stirred for 1.5 hours. Thereafter, 540 ml of toluene was added to the reaction system, and then, the reaction mixture was transferred to a separatory funnel to remove the water layer. The remained organic layer was dried over magnesium sulfate, and then, celite filtration was performed. By distilling off the solvent under reduced pressure, an acrylonitrile adduct was obtained. Since analyses of the obtained substance by $^1$H-NMR and MS well corresponded to the knownsubstance, additional purification was not performed and the obtained substance was used for the next reduction reaction.

- Second process -

Into a 1L autoclave, 24 g of the obtained acrylonitrile adduct, 48 g of Ni catalyst (RANEY NICKEL 2400, manufactured by W.R.Grace & Co.), and 600 ml of 25% by mass of aqueous ammonia solution (water : methanol = 1 : 1) were placed and suspended, and then the reaction container was airtightly closed. Into the reaction container, 10 Mpa hydrogen was introduced, and the mixture was reacted at a reaction temperature of 25°C for 16 hours Loss of raw material was confirmed by $^1$H-NMR, the reaction mixture was subjected to celite filtration, and the celite was washed with methanol for several times. By distilling off the solvent under reduced pressure, a polyamine body is obtained. The obtained substance was not subjected to further purification, and used for the next reaction.

- Third process -

Into a 2L three-necked flask provided with a stirrer, 30 g of the obtained polyamine body, 120 g of $NaHCO_3$ (14 eq), 1L of dichloromethane, 50 ml of water were added, and 92.8 g of acrylic acid chloride (10 eq) were added dropwise thereto over 3 hours in a ice bath. Thereafter, the mixture was stirred at room temperature for 3 hours. Loss of raw material was confirmed by $^1$H-NMR, and the solvent was distilled off from the reaction mixture under reduced pressure. Subsequently, the reaction mixture was dried over magnesium sulfate, and celite filtration was performed to distil off the solvent under reduced pressure. Lastly, the resultant was purified by column chromatography (ethyl acetate /methanol = 4 : 1), a solid of a polymerizable compound J-3 which is a tetra-functional acrylamide at ordinary temperature ($R^1$ = H, $R^2$ = $C_3H_6$, $R^3$ = $CH_2$, X = Y = Z = 0 in the General formula (2)) was obtained. The yield of the obtained polymerizable compound J-3 by way of the third process was 40% by mass.

< Preparation of magenta ink M-1 >

A magenta dispersion was prepared in a similar manner to the preparation of the cyan dispersion except that Pigment Blue 15:3 which is a cyan pigment is changed to the same mass of magenta pigment Pigment Red 122 (manufactured by Dainichiseika Color & Chemicals Manufacturing Co., Ltd.).

Next, magenta ink M-1 was prepared in a similar manner to the preparation of the cyan ink C-1 except that the composition was changed as shown in the Table 3 below.

< Preparation of magenta inks M-2 to M-27 >

Magenta inks M-2 to M-27 were prepared in a similar manner to the preparation of the magenta ink M-1 except that the composition was changed as shown in the Table 3 below.

Table 2

| No. | Cyan ink | | | | | | | | | | |
|---|---|---|---|---|---|---|---|---|---|---|---|
| | Cyan dispersion | Polymerizable compound | | | | Aqueous dispersion of self-dispersing polymer particle | | Initiator Irg2959 | Surfactant E1010 | Water | Notes |
| | | J-1 | J-2 | J-3 | J-4 | Polymer particle No. | Amount | | | | |
| C-1 | 10% | 15% | | 10% | | P-1 | 7.9% | 1.5% | 1% | Balance | Present invention |
| C-2 | 10% | 15% | | 10% | | P-2 | 7.9% | 1.5% | 1% | Balance | Present invention |
| C-3 | 10% | 15% | | 10% | | P-3 | 7.9% | 1.5% | 1% | Balance | Present invention |
| C-4 | 10% | 15% | | 10% | | P-4 | 7.9% | 1.5% | 1% | Balance | Present invention |
| C-5 | 10% | 15% | | 10% | | P-5 | 7.9% | 1.5% | 1% | Balance | Present invention |
| C-6 | 10% | 15% | | 10% | | P-5 | 11.9% | 1.5% | 1% | Balance | Present invention |
| C-7 | 10% | 15% | | 10% | | P-5 | 19.8% | 1.5% | 1% | Balance | Present invention |
| C-8 | 10% | 15% | | 10% | | P-5 | 4.0% | 1.5% | 1% | Balance | Present invention |
| C-9 | 10% | 15% | | 10% | | P-5 | 2.0% | 1.5% | 1% | Balance | Present invention |
| C-10 | 10% | 15% | | 10% | | P-6 | 7.9% | 1.5% | 1% | Balance | Present invention |
| C-11 | 10% | 15% | | 10% | | P-7 | 7.9% | 1.5% | 1% | Balance | Present invention |
| C-12 | 10% | 15% | | 10% | | P-8 | 7.9% | 1.5% | 1% | Balance | Present invention |
| C-13 | 10% | 25% | | | | P-8 | 7.9% | 1.5% | 1% | Balance | Present invention |
| C-14 | 10% | 15% | 10% | | | P-8 | 7.9% | 1.5% | 1% | Balance | Present invention |
| C-15 | 10% | 15% | | 10% | | P-9 | 7.9% | 1.5% | 1% | Balance | Present invention |
| C-16 | 10% | 15% | | 10% | | P-10 | 7.9% | 1.5% | 1% | Balance | for reference |
| C-17 | 10% | 15% | | 10% | | P-11 | 7.9% | 1.5% | 1% | Balance | for referencetion |
| C-18 | 10% | 15% | | 10% | | P-12 | 7.9% | 1.5% | 1% | Balance | for reference |
| C-19 | 10% | | | | 25% | P-8 | 7.9% | 1.5% | 1% | Balance | Comparative |
| C-20 | 10% | 15% | | 10% | | P-13 | 7.9% | 1.5% | 1% | Balance | Comparative |
| C-21 | 10% | 15% | | 10% | | P-14 | 7.9% | 1.5% | 1% | Balance | Comparative |
| C-22 | 10% | 15% | | 10% | | P-15 | 7.9% | 1.5% | 1% | Balance | Comparative |
| C-23 | 10% | 15% | | 10% | | P-16 | 7.9% | 1.5% | 1% | Balance | Comparative |

(continued)

| No. | Cyan ink | | | | | | | | | | |
|---|---|---|---|---|---|---|---|---|---|---|---|
| | Cyan dispersion | Polymerizable compound | | | | Aqueous dispersion of self-dispersing polymer particle | | Initiator Irg2959 | Surfactant E1010 | Water | Notes |
| | | J-1 | J-2 | J-3 | J-4 | Polymer particle No. | Amount | | | | |
| C-24 | 10% | 15% | | 10% | | P-17 | 7.9% | 1.5% | 1% | Balance | Comparative |
| C-25 | 10% | 15% | | 10% | | P-18 | 7.9% | 1.5% | 1% | Balance | Comparative |
| C-26 | 10% | 15% | | 10% | | P-19 | 7.9% | 1.5% | 1% | Balance | Comparative |
| C-27 | 10% | 15% | | 10% | | - | - | 1.5% | 1% | Balance | Comparative |

In Table 2, ink compositions C-16 to C-18 do not fall under the scope of the present invention and are regarded as Reference Examples.

Table 3

| No. | Magenta ink | | | | | | | | | | |
|---|---|---|---|---|---|---|---|---|---|---|---|
| | Magenta dispersion | Polymerizable compound | | | | Aqueous dispersion of self-dispersing polymer particle | | initiator Irg2959 | Surfactant E1010 | Water | Notes |
| | | J-1 | J-2 | J-3 | J-4 | Polymer particle No. | Amount | | | | |
| M-1 | 28% | 15% | | 10% | | P-1 | 7.9% | 3.0% | 1.5% | Balance | Present invention |
| M-2 | 28% | 15% | | 10% | | P-2 | 7.9% | 3.0% | 1.5% | Balance | Present invention |
| M-3 | 28% | 15% | | 10% | | P-3 | 7.9% | 3.0% | 1.5% | Balance | Present invention |
| M-4 | 28% | 15% | | 10% | | P-4 | 7.9% | 3.0% | 1.5% | Balance | Present invention |
| M-5 | 28% | 15% | | 10% | | P-5 | 7.9% | 3.0% | 1.5% | Balance | Present invention |
| M-6 | 28% | 15% | | 10% | | P-5 | 11.9% | 3.0% | 1.5% | Balance | Present invention |
| M-7 | 28% | 15% | | 10% | | P-5 | 19.8% | 3.0% | 1.5% | Balance | Present invention |
| M-8 | 28% | 15% | | 10% | | P-5 | 4.0% | 3.0% | 1.5% | Balance | Present invention |
| M-9 | 28% | 15% | | 10% | | P-5 | 2.0% | 3.0% | 1.5% | Balance | Present invention |
| M-10 | 28% | 15% | | 10% | | P-6 | 7.9% | 3.0% | 1.5% | Balance | Present invention |
| M-11 | 28% | 15% | | 10% | | P-7 | 7.9% | 3.0% | 1.5% | Balance | Present invention |
| M-12 | 28% | 15% | | 10% | | P-8 | 7.9% | 3.0% | 1.5% | Balance | Present invention |
| M-13 | 28% | 15% | | | | P-8 | 7.9% | 3.0% | 1.5% | Balance | Present invention |

(continued)

| No. | Magenta ink | | | | | | | | | | |
|---|---|---|---|---|---|---|---|---|---|---|---|
| | Magenta dispersion | Polymerizable compound | | | | Aqueous dispersion of self-dispersing polymer particle | | initiator Irg2959 | Surfactant E1010 | Water | Notes |
| | | J-1 | J-2 | J-3 | J-4 | Polymer particle No. | Amount | | | | |
| M-14 | 28% | 15% | 10% | | | P-8 | 7.9% | 3.0% | 1.5% | Balance | Present invention |
| M-15 | 28% | 15% | | 10% | | P-9 | 7.9% | 3.0% | 1.5% | Balance | Present invention |
| M-16 | 28% | 15% | | 10% | | P-10 | 7.9% | 3.0% | 1.5% | Balance | for reference |
| M-17 | 28% | 15% | | 10% | | P-11 | 7.9% | 3.0% | 1.5% | Balance | for reference |
| M-18 | 28% | 15% | | 10% | | P-12 | 7.9% | 3.0% | 1.5% | Balance | for reference |
| M-19 | 28% | | | | 25% | P-8 | 7.9% | 3.0% | 1.5% | Balance | Comparative |
| M-20 | 28% | 15% | | 10% | | P-13 | 7.9% | 3.0% | 1.5% | Balance | Comparative |
| M-21 | 28% | 15% | | 10% | | P-14 | 7.9% | 3.0% | 1.5% | Balance | Comparative |
| M-22 | 28% | 15% | | 10% | | P-15 | 7.9% | 3.0% | 1.5% | Balance | Comparative |
| M-23 | 28% | 15% | | 10% | | P-16 | 7.9% | 3.0% | 1.5% | Balance | Comparative |
| M-24 | 28% | 15% | | 10% | | P-17 | 7.9% | 3.0% | 1.5% | Balance | Comparative |
| M-25 | 28% | 15% | | 10% | | P-18 | 7.9% | 3.0% | 1.5% | Balance | Comparative |
| M-26 | 28% | 15% | | 10% | | P-19 | 7.9% | 3.0% | 1.5% | Balance | Comparative |

(continued)

| No. | Magenta ink | | | | | | | | | | |
|---|---|---|---|---|---|---|---|---|---|---|---|
| | Magenta dispersion | Polymerizable compound | | | | Aqueous dispersion of self-dispersing polymer particle | | initiator Irg2959 | Surfactant E1010 | Water | Notes |
| | | J-1 | J-2 | J-3 | J-4 | Polymer particle No. | Amount | | | | |
| M-27 | 28% | 15% | | 10% | | - | - | 3.0% | 1.5% | Balance | Comparative |

In Table 3, ink compositions M-16 to M-18 do not fall under the scope of the present invention and are regarded as Reference Examples.

- Notes for Table 2 and Table 3 -

- The amount (%) of each component represents the content (% by mass) when the total amount of the ink is 100% by mass.
- The amount of aqueous dispersion of a self-dispersing polymer particle is not the content of the self-dispersing polymer particle but the content of aqueous dispersion (25.3% by mass concentration of aqueous dispersion of self-dispersing polymer particle) of the self-dispersing polymer particle.

<< Preparation of treatment liquid >>

The components of the composition below were mixed to prepare a treatment liquid.

- Composition of treatment liquid -

- malonic acid (manufactured by Wako Pure Chemical Industries Ltd.)
  ... 25% by mass
- diethylene glycol monomethyl ether (manufactured by Wako Pure Chemical Industries Ltd.)
  ... 20% by mass
- EMULGEN P109 (manufactured by Kao corporation, nonionic surfactant)
  ... 1% by mass
- ion exchanged water
  ... Balance which is added to the amount of the other components to account for the total of 100% by mass

<< Preparation of recording medium >>

For forming an image, the recording medium shown in the Table 4 below was prepared.

Table 4

| Type of paper | Grade | Manufacturer | Basis weight ($g/m^2$) | Amount of water transferred | |
|---|---|---|---|---|---|
| | | | | 100 ms | 400 m s |
| OK TOP COAT PLUS | A2 Gloss | Oji Paper Co., Ltd. | 104.7 | 3.0 | 3.4 |
| AURORA COAT | A2 Gloss | Nippon Paper Industries Co ., Ltd. | 104.7 | 2.8 | 3.4 |
| NEW AGE | A2 Matte | Oji Paper Co., Ltd. | 104.7 | 5.9 | 8.9 |
| U-LIGHT | A2 Matte | Nippon Paper Industries Co ., Ltd. | 104.7 | 3.9 | 5.9 |
| TOKUBISHI ART BOTH SIDES N | A1 Art | Mitsubishi Paper Mills Ltd. | 104.7 | 2.7 | 3.5 |
| OK KINFUJI PLUS | A1 Art | Oji Paper Co., Ltd. | 127 | 1.9 | 2.5 |
| SA KINFUJI PLUS | A0 Art | Oji Paper Co., Ltd. | 127 | 1.9 | 2.2 |

[Example 1]

<< Image formation (ink jet recording) >>

First, as shown in Fig. 1, an ink jet recording apparatus including: a treatment liquid applying unit 12 provided with a treatment liquid ejection head 12S which ejects a treatment liquid; a treatment liquid drying zone 13 which dries the applied treatment liquid; an ink ejection unit 14 which ejectss a variety of ink compositions; an ink drying zone 15 which dries the ejected ink composition; and a UV irradiation unit16 provided with a UV irradiation lamp 16S which can emits ultraviolet (UV) are arranged sequentially in the order mentioned above in a direction (an arrow direction in the figure) in which a recording medium was prepared.

Although not shown, the treatment liquid drying zone 13 was configured to be provided with an air blowing unit which performs drying by blowing a drying air on the recording surface side of the recording medium, to be provided with an infrared heater on the non-recording surface side of the recording medium, and to be able to evaporate (dry) 70% by mass or more of the water in the treatment liquid by adjusting the temperature and the amount of air until 900 msec has passed. In addition, in the ink discharging unit 14, a black ink ejection head 30K, a cyan ink ejection head 30C, a magenta ink ejection head 30M, and a yellow ink ejection head 30Y are arranged and where each head is a full-line head (driving frequency: 25 kHz) having a width of 1200 dpi/10 inches and is able to record by ejecting each color with a single pass in the main scanning direction.

In the present Example, the positions of the cyan ink ejection head 30C and the magenta ink ejection head 30M in Figure 1 were changed with each other, in other words, the arrangement was changed such that magenta ink and cyan ink can be ejected in the order mentioned.

The above-mentioned treatment liquid, the above-mentioned magenta ink M-1, and the above-mentioned cyan ink C-1 were sequentially filled into storage tanks (not illustrated) which were respectively connected to the above-mentioned treatment liquid ejection head 12S, magenta ink ejection head 30M, and cyan ink ejection head 30C, and the above-mentioned treatment liquid, the above-mentioned magenta ink M-1, and the above-mentioned cyan ink C-1 were impacted in the order mentioned to form an image.

In this case, the application amount of the treatment liquid to the recording medium was 1.5 $ml/m^2$.

As the recording medium, OK TOP COAT PLUS was used.

In the image formation, the magenta ink and the cyan ink were ejected from each head at a resolution of 1200 dpi $\times$ 1200 dpi and an ink droplet amount of 2.4 pl.

In the formation of the image mentioned below, the treatment liquid, magenta ink, and cyan ink were applied successively on a sample obtained by cutting the recording medium into A5 size to form an image.

Specifically, the formation of an image was performed as follows.

First, after the treatment liquid was ejected (applied) on the recording medium as a single pass from the treatment liquid ejection head 12S, the drying of the treatment liquid was performed at the treatment liquid drying zone 13 and the treatment liquid drying zone was passed through until 900 msec from the start of the ejection of the treatment liquid. In the treatment liquid drying zone 13, the treatment liquid which has been attached as droplets was dried by a 120°C warm air being blown against the droplet attachment surface at 5 m/sec for 5 seconds using an air blower while the film surface temperature was heated to be 40 to 45°C using the infrared heater from the rear side (back surface) of the droplet attachment surface.

Subsequently, the magenta ink M-1 was applied from the ejection head 30M in a single pass at a dot ratio of 100% in a solid shape on the surface (treatment liquid application surface) of a recording medium on which a treatment liquid had been applied. On the applied magenta ink M-1 on the recording medium, the cyan ink C-1 was applied from the ejection head 30C in a single pass at a dot ratio of 100% in a solid shape to thereby obtain a solid image.

While heating the recording medium on which the image was formed by an infrared heater from the rear side (back surface) of the ink droplet attachment surface on the ink drying zone 15 in a similar manner to the above, a warm air was blown to the recording surface at 120°C at 5 m/sec for 5 seconds by an air blower to dry the image. The conveying speed was adjusted such that the time between the point in time when the droplets of the cyan ink were impacted on the recording medium and the point in time when the image was transferred to the ink drying zone 15 to start drying was about 1 second.

The image after drying was irradiated with a UV light (manufactured by Eye Graphics Co. Ltd., METAL HALIDE LAMP, maximum irradiation wavelength: 365nm) in the UV irradiation unit 16 such that the amount of accumulated irradiation was $2J/cm^2$ to cure the imge.

By the above, the image sample for evaluation was obtained.

<< Evaluation >>

For the cyan ink C-1, the magenta ink M-1, and the image sample for evaluation, the following evaluation was

performed. The evaluation result is shown in the Table 5 below.

< Image deformation >

The solid image on the above-mentioned sample was observed by an optical microscope (magnification ×300) and a visual inspection, and was evaluated with respect to image deformation in accordance with the evaluation criteria below.

- Evaluation criteria -

A: An abnormality was not observed by optical microscope observation and by visual observation. A uniform solid image was obtained.
B: An image crack was observed by the optical microscope observation, but an abnormality was not recognized by visual observation. A uniform solid image was obtained.
C: Although a image crack was slightly observed also by a visual observation, the crack was within a range which does not cause a practical problem.
D: Noticeable image crack was obserbed also by a visual observation.

< Gloss unevenness >

In addition to the above-mentioned image sample (dot ratio of image: 100%), image samples in which the dot ratio of the image in the above-mentioned image sample was changed to 10%, 20%, 30%, 40%, 50%, 60%, 70%, 80%, and 90% were prepared(the number of the image samples was 10 in total).
For the image of each of the obtaind 10 image samples, the gloss unevenness on the surface was obserbed by visual inspection, and evaluated in accordance with the below-mentioned evaluation criteria.

- Evaluation criteria -

A: Gloss unevenness was not observed in all of the image samples. The gloss of the surface of the image was favorable.
B: Although a slightgloss unevenness was obserbed in some of the image samples, the gloss unevenness was within a range which does not cause a practical problem.
C: In some of the image samples, a distinct gloss unevenness (the gloss of a part of the image was degraded).

< Removal performance of ink >

The ink was attached on a liquid-repellent film of a test piece including on the surface a liquid-repellent film, and then, the removal performance when the test piece was immersed in a pure water to be cleaned (removed) was evaluated. This evaluation was performed for each of the above-mentioned cyan ink C-1 and the above-mentioned magenta ink M-1. The above-mentioned liquid-repellent film which was provided on the test piece was a liquid-repellent film including a fluorinated alkyl group similar to the liquid-repellent film which was provided on the ejection surface of the ink jet recording head, and more specifically, a monomolecular film (SAM film) of a fluorinated alkyl silane compound ($C_8F_{17}C_2H_4SiCl_3$) described in paragraphs 0152 and 0154 of JP-A No. 2011-111527.
Specifically, firstly, the ink to be evaluated was applied on the liquid-repellent film of the above-mentioned test piece by a spray to form an ink attachment having a droplet diameterof 50 μm or smaller on the surface of the liquid-repellent film. Next, the test piece was dried under conditions of 23°C50%RH for 1 hour, and then a region of 1 mm × 1 mm on the surface on which the ink attachment was formed was photographed by a digital camera by using an optical microscope on which a digital camera was installed to obtain a photographed image before immersing.
Next, the photographed test piece was immersed in pure water for 1 second such that the surface on which the ink attachment was formed was immersed in pure water and taken out, and then water drops on the surface on which the ink attachment was formed were blown off by wind pressure. Thereafter, the same range to that of the photographed image before immersing was photographed by a digital camera in a similar manner to that before immersing to obtain a photographed imge after immersing.
By comparing the photographed image before immersing with the photographed imge after immersing, the

droplet diameter of the ink attachment which was remained after immersing and that of before immersing was measured.

By the measurement, the droplet diameter of the ink attachment before immersing, which has the smallest drop size among the ink attachments remained after immersing, was defined as an unremovable minimum droplet diameter.

The above operation was repeated 10 times in total, the average value of the unremovable minimum droplet diameters was calculated, and evaluation was performed in accordance with the evaluation criteria below.

- Evaluation criteria -

A ... The average value of the unremovable minimum droplet diameter was 20 μm or larger. The ink removal performance was considerably favorable.

B ... The average value of the unremovable minimum droplet diameter was from 15 μm to smaller than 20 μm. The ink removal performance was favorable.

C ... The average value of the unremovable minimum droplet diameter was from 10 μm to smaller than 15 μm. The ink removal performance did not have a practical problem.

D ... The average value of the unremovable minimum droplet diameter was smaller than 10 μm. The ink removal performance had a practical problem.

[Examples 2 to 21, Reference Examples 22 to 24 and Comparative Examples 1 to 9]

An image was formed in a similar manner to Example 1 except that the cyan ink, magenta ink, and recording medium was changed as shown in the Table 5 below and a similar evaluation to Example 1 was performed.

The evaluation results are shown in the Table 5.

Table 5

| | Ink | | | | Recording medium | Image deformation | Gloss unevenness | Removal performance of ink | |
|---|---|---|---|---|---|---|---|---|---|
| | Magenta | | Cyan | | | | | Magenta | Cyan |
| | No. | Polymer particle No. | No. | Polymer particle No. | | | | | |
| Example 1 | M-1 | P-1 | C-1 | P-1 | OK TOP COAT PLUS | A | A | A | A |
| Example 2 | M-2 | P-2 | C-2 | P-2 | OK TOP COAT PLUS | B | A | A | A |
| Example 3 | M-3 | P-3 | C-3 | P-3 | OK TOP COAT PLUS | B | A | A | A |
| Example 4 | M-4 | P-4 | C-4 | P-4 | OK TOP COAT PLUS | A | A | A | A |
| Example 5 | M-5 | P-5 | C-5 | P-5 | OK TOP COAT PLUS | A | A | A | A |
| Example 6 | M-6 | P-5 | C-6 | P-5 | OK TOP COAT PLUS | A | A | B | A |
| Example 7 | M-7 | P-5 | C-7 | P-5 | OK TOP COAT PLUS | A | A | B | B |
| Example 8 | M-8 | P-5 | C-8 | P-5 | OK TOP COAT PLUS | A | A | A | A |
| Example 9 | M-9 | P-5 | C-9 | P-5 | OK TOP COAT PLUS | B | A | A | A |
| Example 10 | M-10 | P-6 | C-10 | P-6 | OK TOP COAT PLUS | B | A | A | A |
| Example 11 | M-11 | P-7 | C-11 | P-7 | OK TOP COAT PLUS | A | A | A | A |
| Example 12 | M-12 | P-8 | C-12 | P-8 | OK TOP COAT PLUS | A | A | A | A |
| Example 13 | M-12 | P-8 | C-12 | P-8 | AURORA COAT | A | A | A | A |
| Example 14 | M-12 | P-8 | C-12 | P-8 | NEW AGE | A | A | A | A |
| Example 15 | M-12 | P-8 | C-12 | P-8 | U-LIGHT | A | A | A | A |
| Example 16 | M-12 | P-8 | C-12 | P-8 | TOKUBISHI ART BOTH SIDES N | A | A | A | A |

(continued)

| | Ink | | | | Recording medium | Image deformation | Gloss unevenness | Removal performance of ink | |
|---|---|---|---|---|---|---|---|---|---|
| | Magenta | | Cyan | | | | | Magenta | Cyan |
| | No. | Polymer particle No. | No. | Polymer particle No. | | | | | |
| Example 17 | M-12 | P-8 | C-12 | P-8 | OK KINFUJI PLUS | A | A | A | A |
| Example 18 | M-12 | P-8 | C-12 | P-8 | SA KINFUJI PLUS | A | A | A | A |
| Example 19 | M-13 | P-8 | C-13 | P-8 | OK TOP COAT PLUS | B | B | B | A |
| Example 20 | M-14 | P-8 | C-14 | P-8 | OK TOP COAT PLUS | A | A | A | A |
| Example 21 | M-15 | P-9 | C-15 | P-9 | OK TOP COAT PLUS | B | A | A | A |
| Reference Example 22 | M-16 | P-10 | C-16 | P-10 | OK TOP COAT PLUS | B | A | A | A |
| Reference Example 23 | M-17 | P-11 | C-17 | P-11 | OK TOP COAT PLUS | B | A | A | A |
| Reference Example 24 | M-18 | P-12 | C-18 | P-12 | OK TOP COAT PLUS | A | A | B | A |
| Comparative Example 1 | M-19 | P-8 | C-19 | P-8 | OK TOP COAT PLUS | C | C | B | A |
| Comparative Example 2 | M-20 | P-13 | C-20 | P-13 | OK TOP COAT PLUS | C | B | D | D |
| Comparative Example 3 | M-21 | P-14 | C-21 | P-14 | OK TOP COAT PLUS | C | B | D | D |
| Comparative Example 4 | M-22 | P-15 | C-22 | P-15 | OK TOP COAT PLUS | C | B | D | D |
| Comparative Example 5 | M-23 | P-16 | C-23 | P-16 | OK TOP COAT PLUS | c | B | D | C |

(continued)

| | Ink | | | | Recording medium | Image deformation | Gloss unevenness | Removal performance of ink | |
|---|---|---|---|---|---|---|---|---|---|
| | Magenta | | Cyan | | | | | Magenta | Cyan |
| | No. | Polymer particle No. | No. | Polymer particle No. | | | | | |
| Comparative Example 6 | M-24 | P-17 | C-24 | P-17 | OK TOP COAT PLUS | D | B | D | C |
| Comparative Example 7 | M-25 | P-18 | C-25 | P-18 | OK TOP COAT PLUS | C | B | D | C |
| Comparative Example 8 | M-26 | P-19 | C-26 | P-19 | OK TOP COAT PLUS | D | B | D | C |
| Comparative Example 9 | M-27 | - | C-27 | - | OK TOP COAT PLUS | D | C | A | A |

In Table 5, Examples 22 to 24 do not fall under the scope of the present invention and are Reference Examples.

As shown in the Tables 1 to 5, in Examples 1 to 21 and Reference Examples 22 to 24, in which the aqueous ink containing a (meth)acrylamide compound and a polymer particle made of a polymer composed of a structural unit derived from a methacrylic acid and a structural unit derived from a methacrylic acid ester having an SP value of 19.0 $MPa^{l/2}$ to 25.0 $MPa^{1/2}$ was used, image deformation and gloss unevenness were inhibited in the formed image and removal performance of the ink was excellent.

In contrast, in Comparative Example 1 in which the aqueous ink not containing a (meth)acrylamide compound was used, the effect of inhibiting image deformation and the effect of inhibiting gloss unevenness were deteriorated.

In Comparative Examples 2 to 4 in which the aqueous ink containing a polymer particle including a structural unit derived from a methacrylic acid ester having an SP value of lower than 19.0 $MPa^{1/2}$ was used, the removal performance of the ink was particularly deteriorated.

In Comparative Examples 5 to 8 in which the aqueous ink containing a polymer particle including a structural unit derived from an acrylic acid and a structural unit derived from an acrylic acid ester was used, the effect of inhibiting image deformation was particularly deteriorated.

In Comparative Example 9 in which the aqueous ink not containing a polymer particle was used, the effect of inhibiting image deformation and the effect of inhibiting gloss unevenness were deteriorated.

Although, in the above Examples, the cyan ink and the magenta ink were used to perform evaluation, the removal performance of an ink can be improved and image deformation and gloss unevenness can be inhibited also in cases in which other color inks such as a yellow ink are used in a similar manner to the above-mentioned Example, by using an aqueous ink containing a (meth)acrylamide compound and a polymer particle made of a polymer composed of a structural unit derived from a methacrylic acid and a structural unit derived from a methacrylic acid ester having an SP value of 19.0 $MPa^{l/2}$ to 25.0 $MPa^{1/2}$

## Claims

**1.** An ink composition for ink jet recording comprising:

water;
a pigment;
a (meth)acrylamide compound; and
a polymer particle made of a polymer composed of

a structural unit derived from methacrylic acid, and
at least one type of structural unit derived from a methacrylic acid ester having an SP value of from 19.0 $MPa^{1/2}$ to 25.0 $MPa^{1/2}$, the SP value being calculated by the Okitsu method,
wherein said at least one type of structural unit derived from a methacrylic acid ester is selected from the group consisting of a structural unit derived from methyl methacrylate, a structural unit derived from benzyl methacrylate, and a structural unit derived from phenoxy ethyl methacrylate.

**2.** The ink composition for ink jet recording according to claim 1, wherein at least one of the (meth)acrylamide compound is a multifunctional (meth)acrylamide compound.

**3.** The ink composition for ink jet recording according to claim 1 or 2, wherein the SP value of the methacrylic acid ester is from 19.4 $MPa^{1/2}$ to 22.0 $MPa^{1/2}$, the SP value being calculated by the Okitsu method.

**4.** The ink composition for ink jet recording according to any one of claims 1 to 3, wherein the polymer particle is a self-dispersing polymer particle.

**5.** The ink composition for ink jet recording according to any one of claims 1 to 4, wherein a glass transition temperature of the polymer particle is 80°C or higher.

**6.** The ink composition for ink jet recording according to any one of claims 1 to 5, wherein the (meth)acrylamide compound is a compound represented by the following General Formula (1):

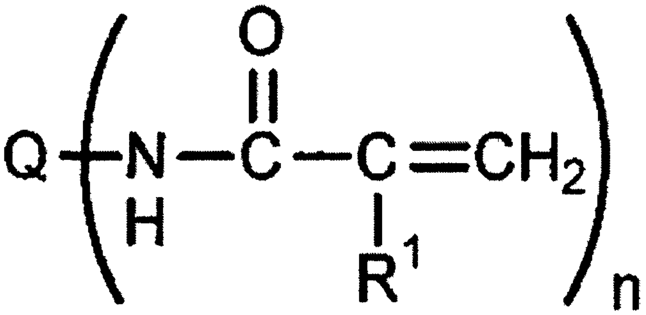

General Formula (1)

wherein in the General Formula (1), Q represents an n-valent linking group, $R^1$ represents a hydrogen atom or a methyl group, and n represents an integer of 1 or greater.

7. The ink composition for ink jet recording according to any one of claims 1 to 6, wherein the (meth)acrylamide compound is a compound represented by the following General Formula (2):

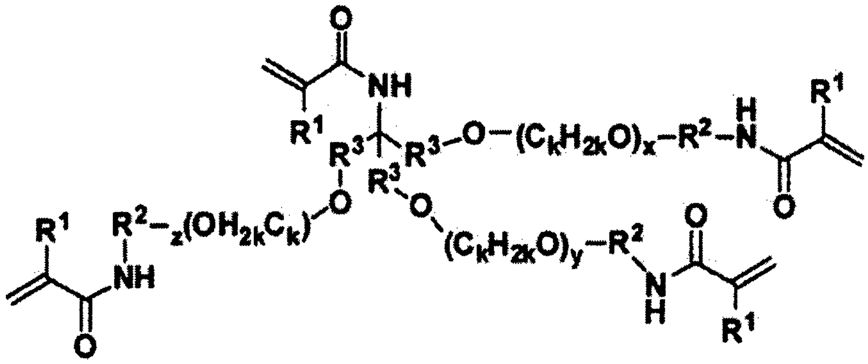

General Formula (2)

wherein in the General formula (2), $R^1$ represents a hydrogen atom or a methyl group, $R^2$ represents a straight chain or branched alkylene group having a carbon number of from 2 to 4, $R^3$ represents a divalent linking group, k represents 2 or 3, and x, y and z each independently represents an integer of from 0 to 6.

8. An image forming method comprising: an ink applying process in which the ink composition for ink jet recording according to any one of claims 1 to 7 is ejected from an ink jet recording head to form an image by applying the ink composition for ink jet recording on a recording medium; and a drying process in which the image after the ink applying process is dried.

9. The image forming method according to claim 8, further comprising a curing process in which, after the drying process, the image after drying is irradiated with an active energy ray to cure the image.

10. The image forming method according to claim 8 or 9, wherein the recording medium comprises one or more pigment layer on at least one side of a support whose main component is cellulose pulp.

11. The image forming method according to any one of claims 8 to 10, further comprising before the ink applying process a treatment liquid applying process in which a treatment liquid containing an aggregating component which forms an aggregate when in contact with the ink composition for ink jet recording is applied on the recording medium, wherein the aggregating component is a compound which can change the pH of the ink composition, a multivalent metal salt, a cationic polymer or a mixture of two or more thereof.

**12.** The image forming method according to claim 11, wherein the aggregating component is an acid.

**13.** An ink set for ink jet recording comprising: the ink composition for ink jet recording according to any one of claims 1 to 7; and a treatment liquid containing an aggregating component which forms an aggregate when in contact with the ink composition for ink jet recording,
wherein the aggregating component is a compound which can change the pH of the ink composition, a multivalent metal salt, a cationic polymer or a mixture of two or more thereof.

## Patentansprüche

**1.** Tintenzusammensetzung für Tintenstrahlaufzeichnung enthaltend:

Wasser;
ein Pigment;
eine (Meth)acrylamidverbindung; und
einen Polymerpartikel, gebildet aus einem Polymer, bestehend aus

einer von Methacrylsäure abstammenden strukturellen Einheit, und
mindestens einem Typ von struktureller Einheit, der von einem Methacrylsäureester mit einem SP Wert von 19,0 $MPa^{1/2}$ bis 25,0 $MPa^{1/2}$ abstammt, wobei der SP Wert durch das Okitsuverfahren kalkuliert wird, wobei dieser mindestens eine Typ von struktureller Einheit, der von einem Methacrylsäureester abstammt, ausgewählt ist aus der Gruppe bestehend aus einer strukturellen Einheit, die von Methylmethacrylat abstammt, einer strukturellen Einheit, die von Benzylmethacrylat abstammt und einer strukturellen Einheit, die von Phenoxyethylmethacrylat abstammt.

**2.** Tintenzusammensetzung für Tintenstrahlaufzeichnung nach Anspruch 1, wobei mindestens eine der (Meth)acrylamidverbindungen eine multifunktionale (Meth)acrylamidverbindung ist.

**3.** Tintenzusammensetzung für Tintenstrahlaufzeichnung nach Anspruch 1 oder 2, wobei der SP Wert des Methacrylsäureesters von 19,4 $MPa^{1/2}$ bis 22,0 $MPa^{1/2}$ beträgt, wobei der SP Wert durch das Okitsuverfahren kalkuliert wird.

**4.** Tintenzusammensetzung für Tintenstrahlaufzeichnung nach einem der Ansprüche 1 bis 3, wobei der Polymerpartikel ein selbstdispergierender Polymerpartikel ist.

**5.** Tintenzusammensetzung für Tintenstrahlaufzeichnung nach einem der Ansprüche 1 bis 4, wobei eine Glasübergangstemperatur des Polymerpartikels 80°C oder höher ist.

**6.** Tintenzusammensetzung für Tintenstrahlaufzeichnung nach einem der Ansprüche 1 bis 5, wobei die (Meth)acrylamidverbindung eine durch die folgende allgemeine Formel (1) dargestellte Verbindung ist:

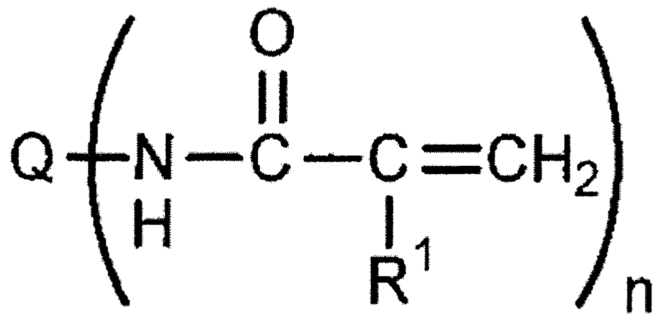

Allgemeine Formel (1)

wobei in der allgemeinen Formel (1), Q eine n-valente Verbindungsgruppe darstellt, $R^1$ ein Wasserstoffatom oder eine Methylgruppe darstellt und n eine ganze Zahl von 1 oder größer darstellt.

7. Tintenzusammensetzung für Tintenstrahlaufzeichnung nach einem der Ansprüche 1 bis 6, wobei die (Meth)acrylamidverbindung eine durch die folgende allgemeine Formel (2) dargestellte Verbindung ist:

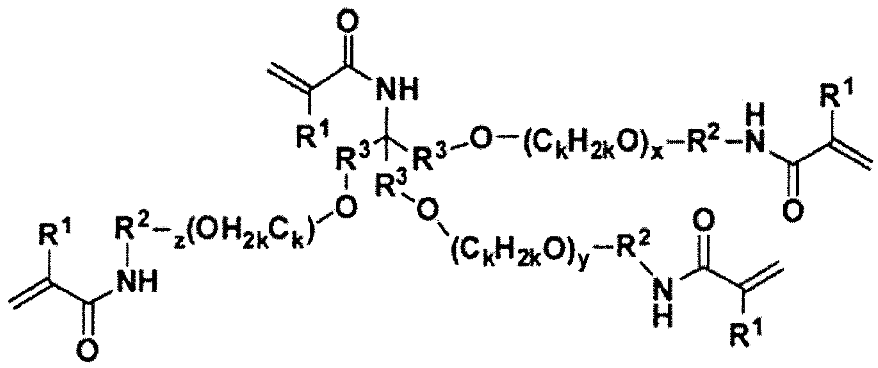

Allgemeine Formel (2)

wobei in der allgemeinen Formel (2), $R^1$ ein Wasserstoffatom oder eine Methylgruppe darstellt, $R^2$ eine geradkettige oder verzweigte Alkylengruppe mit einer Kohlenstoffanzahl von 2 bis 4 darstellt, $R^3$ eine divalente Verbindungsgruppe darstellt, k 2 oder 3 darstellt und x, y und z jeweils unabhängig eine ganze Zahl von 0 bis 6 darstellen.

8. Bildgebendes Verfahren umfassend: einen Tintenapplikationsprozess in dem die Tintenzusammensetzung für Tintenstrahlaufzeichnung nach einem der Ansprüche 1 bis 7 aus einem Tintenstrahlaufzeichnungskopf ausgestoßen wird, um durch Applizieren der Tintenstrahlzusammensetzung für Tintenstrahlaufzeichnung auf ein Aufzeichnungsmedium ein Bild zu bilden; und einen Trocknungsprozess, in dem das Bild nach dem Applikationsprozess getrocknet wird.

9. Bildgebendes Verfahren nach Anspruch 8, ferner umfassend einen Härtungsprozess, in dem nach dem Trocknungsprozess das Bild nach dem Trocknen mit einem aktiven Energiestrahl belichtet wird, um das Bild zu härten.

10. Bildgebendes Verfahren nach Anspruch 8 oder 9, wobei das Aufzeichnungsmedium eine oder mehrere Pigmentschichten auf mindestens einer Seite eines Trägers, dessen Hauptkomponente Cellulosepulpe ist, umfasst.

11. Bildgebendes Verfahren nach einem der Ansprüche 8 bis 10, ferner umfassend vor dem Tintenapplikationsprozess einen Behandlungsflüssigkeitsapplikationsprozess, in dem eine eine Aggregierungskomponente enthaltende Behandlungsflüssigkeit, die ein Aggregat bildet, wenn sie in Kontakt mit der Tintenzusammensetzung für Tintenstrahlaufzeichnung ist, auf das Aufzeichnungsmedium appliziert wird,
wobei die Aggregierungskomponente eine Verbindung ist, die den pH der Tintenzusammensetzung ändern kann, ein multivalentes Metallsalz, ein kationisches Polymer oder eine Mischung von zwei oder mehreren davon.

12. Bildgebendes Verfahren nach Anspruch 11, wobei die Aggregierungskomponente eine Säure ist.

13. Tintenset für Tintenstrahlaufzeichnung umfassend: die Tintenzusammensetzung für Tintenstrahlaufzeichnung nach einem der Ansprüche 1 bis 7; und eine eine Aggregierungskomponente enthaltende Behandlungsflüssigkeit, die ein Aggregat bildet, wenn sie in Kontakt mit der Tintenzusammensetzung für Tintenstrahlaufzeichnung ist,
wobei die Aggregierungskomponente eine Verbindung ist, die den pH der Tintenzusammensetzung ändern kann, ein multivalentes Metallsalz, ein kationisches Polymer oder eine Mischung von zwei oder mehreren davon.

**Revendications**

1. Composition d'encre pour enregistrement à jet d'encre, comprenant :

de l'eau ;
un pigment ;
un composé (méth)acrylamide, et

une particule polymère faite dans un polymère composé de :

un motif constitutif dérivé de l'acide méthacrylique, et
au moins un type de motif constitutif dérivé d'un ester d'acide méthacrylique présentant une valeur SP allant de 19,0 $MPa^{1/2}$ à 25,0 $MPa^{1/2}$, la valeur SP étant calculée par la méthode d'Okitsu,

dans laquelle ledit au moins un type de motif constitutif dérivé d'un ester d'acide méthacrylique est sélectionné parmi le groupe consistant en un motif constitutif dérivé de méthacrylate de méthyle, un motif constitutif dérivé de méthacrylate de benzyle, et un motif constitutif de méthacrylate de phénoxyéthyle.

**2.** Composition d'encre pour enregistrement à jet d'encre selon la revendication 1, dans laquelle au moins un du composé (méth)acrylamide est un composé (méth)acrylamide multifonctionnel.

**3.** Composition d'encre pour enregistrement à jet d'encre selon la revendication 1 ou 2, dans laquelle la valeur SP de l'ester d'acide méthacrylique s'étend de 19,4 $MPa^{1/2}$ à 22,0 $MPa^{1/2}$, la valeur SP étant calculée par la méthode d'Okitsu

**4.** Composition d'encre pour enregistrement à jet d'encre selon l'une quelconque des revendications 1 à 3, dans laquelle la particule polymère est une particule polymère auto-dispersante.

**5.** Composition d'encre pour enregistrement à jet d'encre selon l'une quelconque des revendications 1 à 4, dans laquelle une température de transition vitreuse de la particule polymère est supérieure ou égale à 80 °C.

**6.** Composition d'encre pour enregistrement à jet d'encre selon l'une quelconque des revendications 1 à 5, dans laquelle le composé (méth)acrylamide est un composé représenté par la formule chimique suivante (1) :

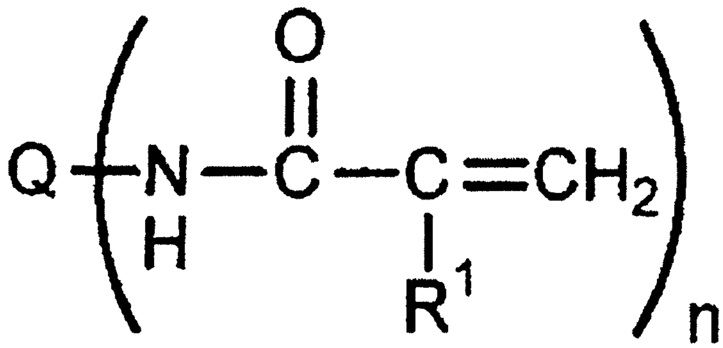

Formule générale (1)

où dans la formule générale (1), Q représente un groupe de liaison de valence n, $R^1$ représente un atome d'hydrogène ou un groupe méthyle, et n représente un entier supérieur ou égal à 1.

**7.** Composition d'encre pour enregistrement à jet d'encre selon l'une quelconque des revendications 1 à 6, dans laquelle le composé (méth)acrylamide est un composé représenté par la formule chimique suivante (2) :

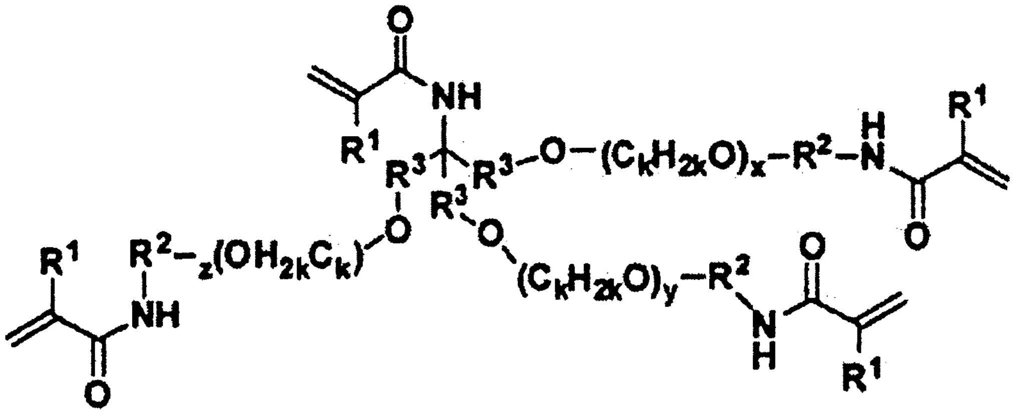

Formule générale (2)

où dans la formule générale (2), $R^1$ représente un atome d'hydrogène ou un groupe méthyle, et $R^2$ représente un groupe alcoylène ramifié ou à chaîne linéaire présentant un nombre de carbones allant de 2 à 4, $R^3$ représente un groupe de liaison divalent, k représente 2 ou 3, et x, y et z représentent chacun indépendamment un entier de 0 à 6.

**8.** Procédé de formation d'image comprenant : un processus d'application d'encre au cours duquel la composition d'encre pour enregistrement à jet d'encre selon l'une quelconque des revendications 1 à 7 est éjectée à partir d'une tête d'enregistrement à jet d'encre pour former une image en appliquant une composition d'encre pour enregistrement à jet d'encre sur un support d'enregistrement, et un processus de séchage au cours duquel l'image, après le processus d'application d'encre, est séchée.

**9.** Procédé de formation d'image selon la revendication 8, comprenant en outre un processus de durcissement au cours duquel, après le processus de séchage, l'image après séchage est irradiée avec un rayonnement d'énergie actif pour faire durcir l'image.

**10.** Procédé de formation d'image selon la revendication 8 ou 9, dans lequel le support d'enregistrement comprend une ou plusieurs couches de pigment sur au moins un côté d'un support dont le composant principal est une pâte cellulosique.

**11.** Procédé de formation d'image selon l'une quelconque des revendications 8 à 10, comprenant en outre, préalablement au processus d'application d'encre, un processus d'application de liquide de traitement au cours duquel un liquide de traitement contenant un composant d'agrégation, lequel forme un agrégat lorsqu'il est en contact avec la composition d'encre pour enregistrement à jet d'encre, est appliqué sur le support d'enregistrement,
dans lequel le composant d'agrégation est un composé pouvant modifier le pH de la composition d'encre, un sel métallique multivalent, un polymère cationique, ou un mélange de deux éléments ou plus parmi ceux-ci.

**12.** Procédé de formation d'image selon la revendication 11, dans lequel le composant d'agrégation est un acide.

**13.** Jeu d'encres pour enregistrement à jet d'encre comprenant : la composition d'encre pour enregistrement à jet d'encre selon l'une quelconque des revendications 1 à 7, et un liquide de traitement contenant un composant d'agrégation, lequel forme un agrégat lorsqu'il est en contact avec la composition d'encre pour enregistrement à jet d'encre,
dans lequel le composant d'agrégation est un composé pouvant modifier le pH de la composition d'encre, un sel métallique multivalent, un polymère cationique, ou un mélange de deux éléments ou plus parmi ceux-ci.

FIG.1

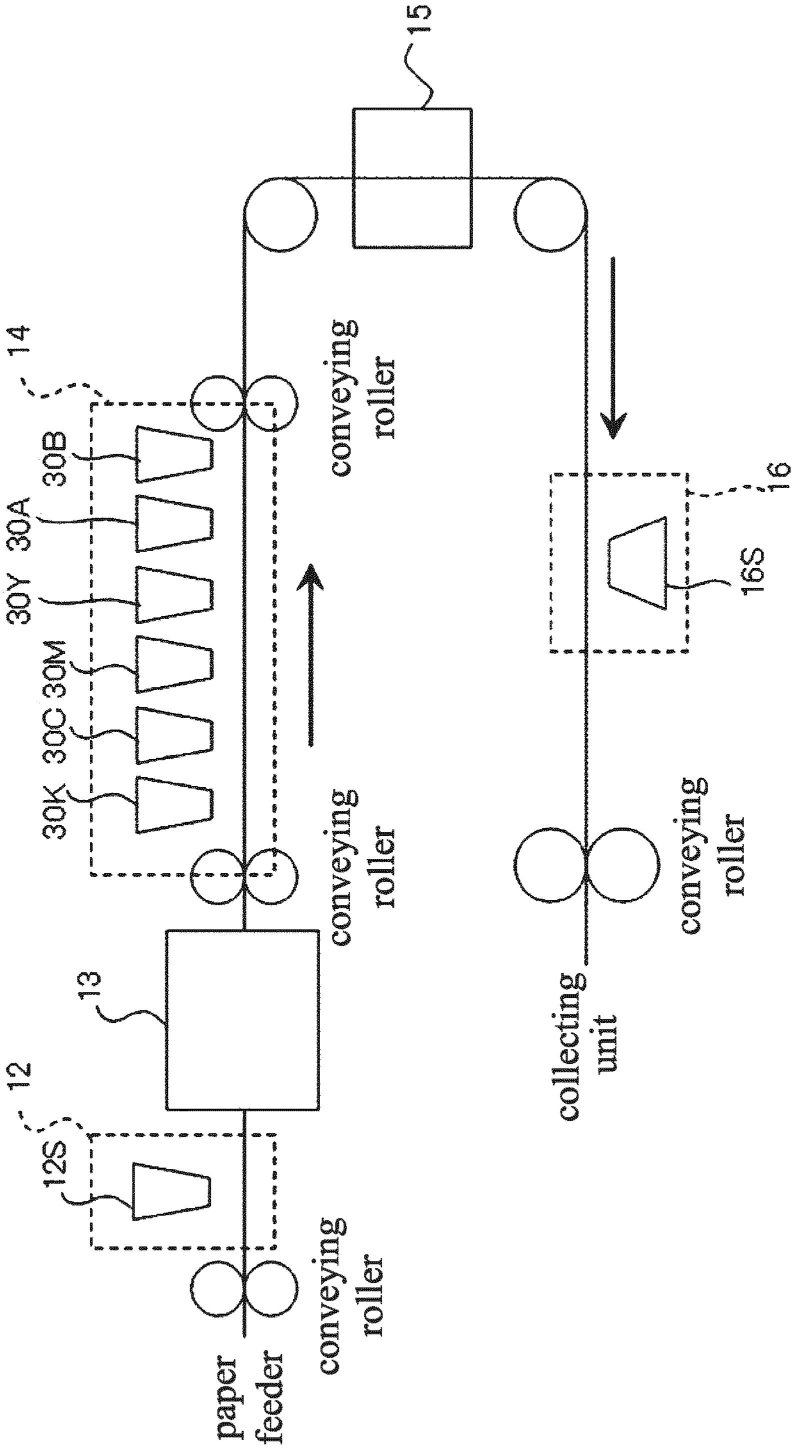
paper feeder
conveying roller
12
12S
13
conveying roller
14
30K
30C
30M
30Y
30A
30B
conveying roller
15
16
16S
conveying roller
collecting unit

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010070693 A
- JP 2010069805 A
- JP 2011046872 A
- JP 2011046871 A
- JP 2011174013 A
- JP 2011195822 A
- JP 2012158084 A
- JP 2012025867 A
- JP 2010064480 A
- JP 2011068085 A
- JP 2011178896 A
- JP 2007100071 A
- JP 2011178029 A
- JP 2001115066 A
- JP 2001335714 A
- JP 2002249677 A
- JP 2001181549 A
- JP 2007169418 A
- JP 2011074150 A
- JP 2011079901 A
- JP 2011042150 A
- JP 2011063001 A
- JP H08169172 A
- JP H0827693 A
- JP H02276670 A
- JP H07276789 A
- JP H09323475 A
- JP S62238783 A
- JP H10153989 A
- JP H10217473 A
- JP H10235995 A
- JP H10337947 A
- JP H10217597 A
- JP HEI10337947 A
- JP 2003306623 A
- JP S5459936 A
- JP 2011111527 A
- JP 2011063777 A


### Non-patent literature cited in the description


- **E. H. IMMERGUT.** Polymer Handbook. Wiley-Interscience, 1989
- *Journal of The Adhesion Society of Japan,* 1993, vol. 29 (6), 249-259